(19) Europäisches Patentamt
European Patent Office
Office européen des brevets

(11) EP 4 711 424 A1

(12) EUROPEAN PATENT APPLICATION
published in accordance with Art. 153(4) EPC

(43) Date of publication:
**18.03.2026 Bulletin 2026/12**

(21) Application number: **24807112.8**

(22) Date of filing: **09.05.2024**

(51) International Patent Classification (IPC):
***C09D 11/16*** $^{(2014.01)}$ ***B43K 8/02*** $^{(2006.01)}$

(52) Cooperative Patent Classification (CPC):
**B43K 8/02; C09D 11/16**

(86) International application number:
**PCT/JP2024/017229**

(87) International publication number:
**WO 2024/237160 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 JP 2023079307**

(71) Applicant: **MITSUBISHI PENCIL COMPANY, LIMITED**
**Tokyo 140-8537 (JP)**

(72) Inventors:
- **MOCHIZUKI, Chihiro**
  **Tokyo 140-8537 (JP)**
- **KAMITANI, Toshimi**
  **Tokyo 140-8537 (JP)**
- **SATO, Kenji**
  **Tokyo 140-8537 (JP)**
- **NAMIKI, Yoshiharu**
  **Tokyo 140-8537 (JP)**

(74) Representative: **Vossius & Partner**
**Patentanwälte Rechtsanwälte mbB**
**Siebertstraße 3**
**81675 München (DE)**

# (54) AQUEOUS INK COMPOSITION FOR WRITING UTENSILS, AND WRITING UTENSIL OBTAINED USING SAME

(57) Provided are an aqueous ink composition for a writing utensil and a writing utensil using the same suitable for a marking pen, a marker pen, and the like, which can highly achieve and maintain compatibility in both durability (water resistance, polyalcohol) and good writing performance even after long-term storage without using a fixing resin and is also excellent to the recent environmental action (less environmental burden). The aqueous ink composition for a writing utensil of the present invention contains at least a water-insoluble cellulose and an evaporation inhibitor, in which a vapor pressure of ink at 50°C is less than 12.3 kPa. A writing utensil of the present invention is characterized by being loaded with the aqueous ink composition for a writing utensil having the configuration described above.

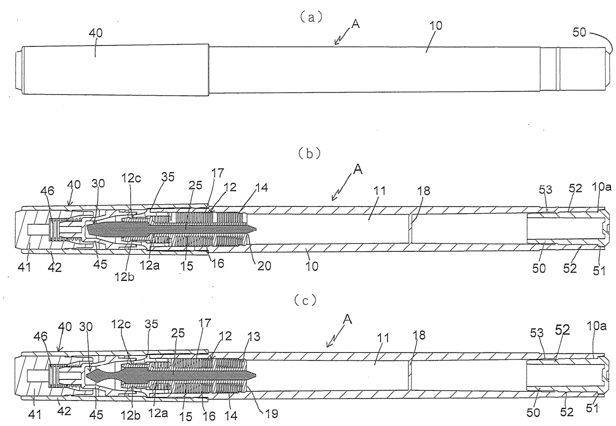

FIG.1

EP 4 711 424 A1

## Description

Technical Field

The present specification relates to an aqueous ink composition for a writing utensil suitable for a marking pen, a marker pen, and the like, and to a writing utensil using the same.

Background Art

In a known aqueous ink composition for a writing utensil such as a marking pen or a marker pen, a fixing resin is blended to enhance the durability [water resistance, in particular, solvent (alcohol) resistance] of a writing line. When the blending amount is increased, the durability is improved, but there is an issue that the liquid viscosity is so increased that the ink design is restricted.

To enhance the durability further, blending compositions of ink using a resin having a low solubility parameter (SP value) and a non-polar solvent for dissolving the resin is often performed, but from the viewpoint of recent environmental action (environmental load), it is becoming unfavorable.

Examples of known aqueous ink compositions for a writing utensil suitable for a marking pen, a marker pen, and the like include:

1) an aqueous ink composition for a writing utensil containing 0.05 to 1.5 mass% of oxidized cellulose and having a limiting viscosity value of 16 mPa·s or less, which is derived by a Casson equation, a viscosity value at a shear rate of 3.83 $s^{-1}$ of 100 to 3000 mPa·s, and a viscosity value at a shear rate of 383 $s^{-1}$ of 10 to 40 mPa·s, to provide an aqueous ink composition for a writing utensil which is excellent in particle storage stability, writing performance over time, followability, and drawing quality while having a low viscosity as compared with a known thickening/gelling agent such as xanthan gum (see, for example, Patent Document 1),
2) an aqueous coloring liquid containing at least an aqueous medium and a cellulose nanofiber dyed with a compound represented by General Formula (1) to provide an aqueous coloring liquid containing a cellulose nanofiber which is colored in a state close to a uniform state and is excellent in storage stability, as an inkjet ink or an ink for a writing utensil (see, for example, Patent Document 2), and
3) an aqueous ink composition for a writing utensil containing water, a pigment, and a biomass nanofiber and having a specific ink viscosity, and a writing utensil using the same, to provide an aqueous ink composition for a writing utensil capable of suppressing sedimentation of a pigment in an ink composition for a writing utensil and suppressing sedimentation when used in an ink for a writing utensil having a low viscosity, and a writing utensil using the same (see, for example, Patent Document 3).

The aqueous ink compositions for a writing utensil and the like described in Patent Documents 1 to 3 are to improve the drawing quality, the storage stability, and the like, using cellulose nanofibers, biomass nanofibers, and the like, but there are still cases in which an adverse effect on weather resistance (water resistance, alcohol resistance, and the like), a viscosity change after long-term storage, and writing performance associated therewith are caused. Compatibility at a high degree between improvement in durability and writing performance after long-term storage is still insufficient, and further improvement has been desired.

Citation List

Patent Document

Patent Document 1: JP 2016-065173 A (Claims, Examples, etc.)
Patent Document 2: JP 2019-210472 A (Claims, Examples, etc.)
Patent Document 3: JP 2018-053182 A (Claims, Examples, etc.)

Summary of Invention

Technical Problem

The present invention has been made in view of the above-described issues and the like of the known art, and an object thereof is to provide an aqueous ink composition for a writing utensil, which achieves and maintains at a high degree

of compatibility in both durability and improvement in writing performance after long-term storage, and is also excellent to the recent environmental action (low environmental burden), and a writing utensil using the same.

Solution to Problem

The inventors of the present invention have conducted intensive studies in view of the above-described known issues, and resultantly found that an aqueous ink composition for a writing utensil and a writing utensil using the same can be obtained by containing at least celluloses having specific physical properties and an evaporation inhibitor and setting the vapor pressure of the ink at 50°C to be less than a predetermined value or the like, thereby completing the present invention.

That is, an aqueous ink composition for a writing utensil of the present invention is characterized by containing at least a water-insoluble cellulose and an evaporation inhibitor, and having a vapor pressure of ink at 50°C of less than 12.3 kPa.

The ink composition preferably has a viscosity measured at a shear rate of 191.5 $s^{-1}$ (50 rpm) of 25.0 mPa·s or less, and a ratio of a viscosity value at 38.3 $s^{-1}$ to a viscosity value at 191.5 $s^{-1}$ of 1.5 or less.

Preferably, the aqueous ink composition for a writing utensil further contains an acetylene-based surfactant.

A writing utensil of the present invention is characterized by being loaded with the aqueous ink composition for a writing utensil having the configuration described above.

Preferably, the writing utensil includes a pen tip, which is a writing portion having a capillary force at one end of a barrel, and the pen tip has an outer diameter on a side of the barrel larger than an outer diameter of the pen tip on a side of the writing portion.

The writing portion of the pen tip is preferably flexible in a writing direction.

The pen tip is preferably provided at each ends of the barrel.

The pen tip preferably includes: the writing portion having a capillary force; and a ballpoint pen tip.

Advantageous Effects of Invention

According to the present disclosure, provided are an aqueous ink composition for a writing utensil and a writing utensil using the same, suitable for a marking pen, a marker pen, or the like, which can highly achieve and maintain compatibility in both durability (water resistance, alcohol resistance) and good writing performance even after long-term storage if not using a fixing resin, and is also excellent to the recent environmental action (less environmental burden).

In the writing utensil of the present disclosure, the outer diameter of the pen tip on the side of the barrel is larger than the outer diameter on the side of the writing portion. Thus, the outflow performance of the ink can be improved, the writing flow rate to the writing portion can be secured, and the occurrence of blurring due to high-speed writing or the like can be suppressed.

Further, in the writing utensil of the present disclosure, the writing portion is flexible in the writing direction. Thus, it is possible to suppress damage to the pen tip due to an excessive writing load and to provide various writing feels.

Further, in the writing utensil of the present disclosure, a plurality of writing portions are provided at the pen tip. Thus, the writing utensil having different writing widths can be provided with one barrel.

The object and effects of the present invention can be recognized and obtained especially using the components and combinations indicated in the claims. Both of general explanation described above and detailed explanation described below are exemplification and explanation and do not limit the present invention described in the claims.

Brief Description of Drawings

FIG. 1 includes drawings each illustrating an example of an embodiment of a direct liquid type writing utensil using an aqueous ink composition for a writing utensil of the present invention, in which FIG. 1(a) is a front view, FIG. 1(b) is a front-view longitudinal sectional view, and FIG. 1(c) is a longitudinal sectional view as viewed from a direction developed by 90° in FIG. 1(b).

FIG. 2 includes drawings each illustrating a state in which a cap is removed from the writing utensil of FIG. 1, in which FIG. 2(a) is a front view, FIG. 2(b) is a front view as viewed from a direction developed by 90° in FIG. 2(a), FIG. 2(c) is a longitudinal sectional view, and FIG. 2(d) is a longitudinal sectional view as viewed from a direction developed by 90° in FIG. 2(c).

FIG. 3 includes drawings each illustrating an example of a writing state of the writing utensil of FIGS. 1 and 2, in which FIG. 3(a) is a use state perspective view as viewed from one direction, and FIG. 3(b) is a use state perspective view as viewed from a direction developed by 90° in FIG. 3(a).

FIG. 4 includes drawings each illustrating an example of an embodiment of a writing utensil, which is a batting type writing utensil using the aqueous ink composition for a writing utensil of the present invention with a cap removed, in which FIG. 4(a) is a front view, FIG. 4(b) is a front view as seen from a direction developed by 90° in FIG. 4(a), FIG. 4(c) is a longitudinal sectional view, and FIG. 4(d) is a longitudinal sectional view as seen from a direction developed by 90° in FIG. 4(c).

FIG. 5 includes drawings each illustrating an example of another embodiment of a batting type writing utensil using the aqueous ink composition for a writing utensil of the present invention, in which FIG. 5(a) is a front view, FIG. 5(b) is a front-view longitudinal sectional view, and FIG. 5(c) is a longitudinal sectional view as viewed from a direction developed by 90° in FIG. 5(b).

FIG. 6 includes drawings each illustrating an example of an embodiment of the writing utensil in FIG. 5 in a state where the cap of the writing utensil is removed, in which FIG. 6(a) is a front view, FIG. 6(b) is a front-view longitudinal sectional view, and FIG. 6(c) is a longitudinal sectional view as viewed from a direction developed by 90° in FIG. 6(b).

FIG. 7 is a component development view of the writing utensil of FIG. 5.

FIGS. 8(a) and 8(b) are perspective views of pen tips 75 and 90 in FIG. 7.

FIG. 9 includes drawings each illustrating an alternative embodiment of the batting type writing utensil using the aqueous ink composition for a writing utensil of FIG. 6, in which FIG. 9(a) is a front view, FIG. 9(b) is a front-view longitudinal sectional view, and FIG. 9(c) is a longitudinal sectional view as viewed from a direction developed by 90° in FIG. 9(b).

FIG. 10 includes drawings each illustrating an alternative embodiment of the batting type writing utensil using the aqueous ink composition for a writing utensil of the present invention, in which FIG. 10(a) is a front view, FIG. 10(b) is a front-view longitudinal sectional view, and FIG. 10(c) is a longitudinal sectional view as viewed from a direction developed by 90° in FIG. 10(b).

FIG. 11 includes drawings each illustrating an example of an embodiment of the writing utensil in FIG. 10 in a state where the cap of the writing utensil is removed, in which FIG. 11(a) is a front view, FIG. 11(b) is a front-view longitudinal sectional view, and FIG. 11(c) is a longitudinal sectional view as viewed from a direction developed by 90° in FIG. 11(b).

FIG. 12 includes drawings each illustrating an example of a writing state of the writing utensil of FIGS. 10 and 11, in which FIG. 12(a) is a use state perspective view as viewed from one direction, and FIG. 12(b) is a use state perspective view as viewed from a direction developed by 180° in FIG. 12(a).

FIGS. 13(a) to (g) are component views of a pen tip 100 of FIG. 10, in which FIG. 13(a) is a perspective view, Fig. 13(b) is a perspective view from the rear side, FIG. 13(c) is a plan view, FIG. 13(d) is a left-side view, FIG. 13(e) is a front view, FIG. 13(f) is a right-side view, and FIG. 13(g) is a longitudinal sectional view in a front view.

## Description of Embodiments

Hereinafter, each embodiment of the present invention will be described in detail. The technical scope of the present invention is not limited to the embodiments described below but includes the invention described in Claims and equivalents thereof. The present invention can be implemented based on the contents disclosed in the present specification and technical common knowledge (including design matters and obvious matters) in the art.

## Aqueous Ink Composition for Writing Utensil

An aqueous ink composition for a writing utensil of the present invention is characterized by containing at least a water-insoluble cellulose and an evaporation inhibitor, and having a vapor pressure of ink at 50°C of less than 12.3 kPa.

## Water-Insoluble Celluloses

In the present invention, examples of an water-insoluble cellulose include water-insoluble cellulose and cellulose derivatives, and any compound may be used as long as the compound uses water-insoluble cellulose as a base material. The water-insoluble celluloses may be those extracted from plants or those obtained by chemical synthesis. The method of production, shape, degree of crystallinity, and the like are not limited. In the present invention, the term "water-insoluble" means that cellulose in the ink composition can be confirmed using an atomic force microscope or an electron microscope (scanning/transmission type).

The water-insoluble cellulose to be used is water-insoluble and is not dissolved in ink while it is present in a dispersed state in the ink. Therefore, it is contained to exhibit a function excellent in solvent resistance while also having water resistance.

Specific examples of the cellulose that becomes water-insoluble cellulose include crystalline cellulose, microcrystalline cellulose, cellulose nanofiber (including oxidized cellulose, the same applies hereinafter), fermented cellulose (bacterial cellulose), and flat cellulose.

Specific examples of the cellulose derivative that becomes water-insoluble cellulose include cationized cellulose, cellulose ester, cellulose ether, cellulose ether ester, halodeoxycellulose, and modified cellulose having a celluronic acid, a carboxyl group, or a salt of a carboxyl group.

The crystalline cellulose may be one obtained by partially depolymerizing α-cellulose and purifying the depolymerized α-cellulose. The crystalline cellulose also includes those referred to as microcrystalline cellulose. Specific examples of crystalline cellulose include CEOLUS KG-801, Avicel PH-101, Avicel PH-102, Avicel PH-301, Avicel PH-302, Avicel RC-A591NF (crystalline cellulose/carmellose sodium), and Avicel RC-591 (crystalline cellulose/carmellose sodium).

Cellulose nanofibers are cellulose homogeneously micronized at a nano level, and are obtained by, for example, chemically and/or mechanically defibrating plant fibers. The cellulose nanofibers include for example, fibers having a fiber diameter of 1 to 100 nm and a large aspect ratio of 5 μm or more in fiber length, and cellulose nanocrystals having a fiber diameter of about 3 to 70 nm and a fiber length of about 100 to 500 nm which are obtained by further treating cellulose nanofibers.

The oxidized cellulose is not particularly limited as long as it is obtained by the fibrillation treatment or the like, has a cellulose I crystal structure, and is obtained by modifying a part of the hydroxyl groups (-OH groups) of the β glucose constituting the cellulose [$(C_6H_{10}O_5)n$: natural polymer in which a large number of β glucose molecules are linearly polymerized by glycosidic bonds] with at least one functional group of aldehyde groups (-CHO) and carboxyl groups (-COOH groups). Examples thereof include those obtained by oxidizing at least the hydroxyl groups (-OH groups) at the C6 position of the β glucose to modify the hydroxyl groups (-OH groups) into aldehyde groups (-CHO) and carboxyl groups (-COOH groups). The production method thereof is not particularly limited, and as the size thereof, for example, those having a fiber diameter of about 1 to 100 nm and a fiber length of about 100 to 500 nm as described above can be used. The fiber diameter and the like can be measured with an electron micrograph.

Specifically, cellulose nanofibers or cellulose nanocrystals obtained by performing the known defibrating treatment, or commercially available cellulose nanofibers or cellulose nanocrystals can be used. Examples of commercially available cellulose nanofibers that can be used include RHEOCRYSTA I-2SX (manufactured by DKS Co., Ltd.), BiNFi-s FMa-100, WFo-100 (manufactured by SUGINO MACHINE LIMITED), and ELLEX-S (manufactured by Daio Paper Corporation).

The fermented cellulose is a cellulose produced by a cellulose-producing bacterium, for example, a bacterium belonging to the genus Acetobacter, the genus Pseudomonas, the genus Agrobacterium, or the like, and is not particularly limited as long as it is any one of these celluloses. Usually, the fermented cellulose can be produced by culturing a cellulose-producing bacterium according to a known method (culture medium, conditions, and the like), and appropriately purifying the obtained fermented cellulose as desired.

Such fermented cellulose has a very fine fiber diameter as compared with the fiber diameter of general cellulose fibers derived from plants. The chemical structure of the polysaccharide constituting the fermented cellulose is basically a linear polymer polysaccharide of β1-4 bonded glucose.

The fermented cellulose used in the present invention has a low viscosity and a low stickiness, unlike thickening polysaccharides, and can be used stably in various inks under conditions of coexisting components, temperature, pH, and the like. Examples of the fermented cellulose that can be used include the fermented cellulose obtained by the above-described production and commercially available Sun Artist series manufactured by San-Ei Gen F.F.I., Inc., for example, Sun Artist H-PN and Sun Artist H-PG.

The flat cellulose is flat cellulose fine particles obtained by mechanically pulverizing a mixture obtained by mixing 0.1 to 100 mass% of fatty acids such as saturated fatty acids, including stearic acid and derivatives thereof, and unsaturated fatty acids such as oleic acid and derivatives thereof with a cellulose-based substance such as fibrous or powdery wood flour or wood pulp derived from wood, and a commercially available product or the like can be used.

Specific examples of the cationized cellulose include polymers of quaternary ammonium salts obtained by adding glycidyltrimethylammonium chloride to hydroxyethylcellulose (polyquaternium-10, for example, Leoguard G, Leoguard GP; manufactured by Lion Corporation, Polymer JR-125, Polymer JR-400, Polymer JR-30M, Polymer LR-400, Polymer LR-30M; manufactured by Amerchol Corporation), and hydroxyethylcellulose/dimethyldiallylammoniumchloride copolymers (polyquaternium-4, for example, CELLCOAT H-100, CELLCOAT L-200; manufactured by National Starch and Chemical Company).

The cellulose ester includes a cellulose single ester in which one ester group is bonded to cellulose, and a cellulose mixed ester in which two or more ester groups are bonded to cellulose. Specific examples of the cellulose single ester include cellulose acetate, cellulose propionate, cellulose butyrate, cellulose valerate, and cellulose stearate. Specific examples of the cellulose mixed ester include cellulose acetate propionate, cellulose acetate butyrate, cellulose acetate valerate, cellulose acetate caproate, cellulose propionate butyrate, and cellulose acetate propionate butyrate. The cellulose single ester and the cellulose mixed ester are not limited these examples. Among these, cellulose acetate cellulose ether includes cellulose single ether in which one ether group is bonded to cellulose, and cellulose mixed ether in which two or more ether groups are bonded to cellulose. Specific examples of the cellulose single ether include methyl

cellulose, ethyl cellulose, propyl cellulose, hydroxymethyl cellulose, hydroxyethyl cellulose, hydroxypropyl cellulose, and carboxymethyl cellulose. Specific examples of the cellulose mixed ether include methyl ethyl cellulose, methyl propyl cellulose, ethyl propyl cellulose, hydroxymethyl methyl cellulose, hydroxymethyl ethyl cellulose, hydroxypropyl methyl cellulose, hydroxyethyl methyl cellulose, and hydroxypropyl methyl cellulose. The cellulose single ether and the cellulose mixed ether are not limited to these examples.

The cellulose ether ester is a cellulose derivative in which one or more ether groups and one or more ester groups are bonded to cellulose. Specific examples of the cellulose ether ester include, but are not limited to, methyl cellulose acetate, methyl cellulose propionate, ethyl cellulose acetate, ethyl cellulose propionate, propyl cellulose acetate, propyl cellulose propionate, hydroxymethyl cellulose acetate, hydroxymethyl cellulose propionate, hydroxyethyl cellulose acetate, hydroxyethyl cellulose propionate, hydroxypropyl cellulose acetate, hydroxypropyl cellulose propionate, carboxymethyl cellulose acetate, and carboxymethyl cellulose propionate. Specific examples of halodeoxycellulose include, but are not limited to, chlorodeoxycellulose, bromodeoxycellulose, and iododeoxycellulose.

These water-insoluble celluloses can be used alone or in combination of two or more thereof (hereinafter referred to as "at least one"). Preferably, cellulose nanofibers or fermented cellulose are used from the viewpoint of the balance between improvement in durability of drawn lines, writing performance, and stability.

The (total) content of these water-insoluble celluloses is preferably 0.1 to 5 mass%, further preferably 0.2 to 5 mass%, and particularly preferably 0.5 to 4 mass% with respect to the total amount of the aqueous ink composition.

When the content of the water-insoluble celluloses is 0.1 mass% or more, durability such as water resistance and alcohol resistance can be imparted to the drawn line, and on the other hand, when the content is 5 mass% or less, an increase in viscosity can be suppressed, and fluidity of the ink can be maintained, which is preferable.

Evaporation Inhibitor

The evaporation inhibitor used in the present invention is contained from the viewpoint of suppressing the ink viscosity from changing due to volatilization of the ink from the pen tip when the cap is removed. At least one of glycerin, ethylene glycol, propylene glycol, diethylene glycol, triethylene glycol, tripropylene glycol, and the like is used.

Glycerin, ethylene glycol, and propylene glycol are preferably used from the viewpoint of suppressing evaporation and the stability of the ink.

The (total) content of these evaporation inhibitors is preferably 1 to 50 mass%, and further preferably 5 to 40 mass% with respect to the total amount of the aqueous ink composition.

When the content of the evaporation inhibitor is 1 mass% or more, evaporation can be suppressed, and particularly when the content is 5 mass% or more, evaporation can be sufficiently suppressed. On the other hand, when the content is 50 mass% or less, an increase in viscosity is suppressed, the fluidity of the ink is improved, and blurring of the drawn line is suppressed, which is preferable.

The aqueous ink composition for a writing utensil used in the present invention contains at least the above-described water-insoluble celluloses and evaporation inhibitor, and preferably further contains a coloring material and an acetylene-based surfactant.

Coloring Material

Examples of the coloring material that can be used include those used for writing utensils, for example, a dye dissolved or dispersed in water; an inorganic or organic pigment system that has been known in the art, such as titanium oxide; colored resin fine particles or a dispersion thereof [including a resin particle pigment containing a pigment, a pseudo pigment produced by coloring a resin emulsion with a dye, a white plastic pigment, or a hollow resin pigment (particles)]; a pigment produced by using silica or mica as a base material and multilayer-coating the surface of the base material with iron oxide or titanium oxide; a thermochromic pigment; a photochromic pigment; and a composite pigment of these.

Examples of the dye include a fluorescent dye, a water-soluble dye, and an oil-soluble dye.

The fluorescent dye that can be used is not particularly limited as long as the dye has good color development, and examples include Basic Yellow 1 and 40; Basic Red 1, 1:1, and 13; Basic Violet 1, 7, 10, and 11:1; Basic Orange 22; Basic Blue 7; Basic Green 1; Acid Yellow 3 and 7; Acid Red 52, 77, 87, and 92; Acid Blue 9; Disperse Yellow 121, 82, and 83; Disperse Orange 11; Disperse Red 58; Disperse Blue 7; Direct Yellow 85; Direct Orange 8; Direct Red 9; Direct Blue 22; Direct Green 6; Solvent Yellow 44; Solvent Red 49; Solvent Blue 5; and Solvent Green 7. In particular, among the fluorescent dyes, an azomethine-based, xanthene-based, or triphenylmethane-based fluorescent dye is preferably used from the viewpoints of color development and ink stability. Specifically, particularly preferred examples of the fluorescent dye include azomethine-based fluorescent dyes such as Basic Yellow 1 and 40; xanthene-based fluorescent dyes such as Basic Red 1:1 and Basic Violet 11:1; triphenylmethane-based fluorescent dyes such as Basic Violet 1. These dyes may be used alone or in combination of two or more thereof.

Examples of the oil-soluble dye that can be used include C.I. Solvent Black 7 and 123; C.I. Solvent Blue 2, 25, 55,

and 70; C.I. Solvent Red 8, 49, and 100; C.I. Solvent Violet 8 and 21; C.I. Solvent Green 3; C.I. Solvent Yellow 21, 44, and 61; and C.I. Solvent Orange 37.

Examples of the water-soluble dye that can be used include acid dyes, basic dyes, direct dyes, and food pigments. Examples include acid dyes, such as C.I. Acid Black 1, 2, 24, 26, 31, 52, 107, 109, 110, 119, and 154, C.I. Acid Yellow 1, 7, 17, 19, 23, 25, 29, 38, 42, 49, 61, 72, 78, 110, 127, 135, 141, and 142, C.I. Acid Red 8, 9, 14, 18, 26, 27, 35, 37, 51, 52, 57, 82, 83, 87, 92, 94, 111, 129, 131, 138, 186, 249, 254, 265, and 276, C.I. Acid Violet 15, 17, and 49, C.I. Acid Blue 1, 7, 9, 15, 22, 23, 25, 40, 41, 43, 62, 78, 83, 90, 93, 100, 103, 104, 112, 113, and 158, C.I. Acid Green 3, 9, 16, 25, and 27, and C.I. Acid Orange 56; basic dyes, such as Malachite Green

(C.I. 42000), Victoria Blue FB (C.I. 44045), Methyl Violet FN (C.I. 42535), Rhodamine F4G (C.I. 45160), and Rhodamine 6GCP (C.I.45160); direct dyes, such as C.I. Direct Black 17, 19, 22, 32, 38, 51, and 71, C.I. Direct Yellow 4, 26, 44, and 50, C.I. Direct Red 1, 4, 23, 31, 37, 39, 75, 80, 81, 83, 225, 226, and 227, C.I. Direct Blue 1, 15, 41, 71, 86, 87, 106, 108, and 199; and food pigments, such as C.I. Food Yellow 3.

Examples of the inorganic pigment include azo lake, insoluble azo pigments, chelate azo pigments, phthalocyanine pigments, perylene and perinone pigments, and nitroso pigments. More specific examples include inorganic pigments, such as carbon black, titanium black, zinc oxide, colcothar, aluminum, chromium oxide, iron black, cobalt blue, iron oxide yellow, viridian, zinc sulfide, lithopone, cadmium yellow, vermilion, cadmium red, chrome yellow, molybdate orange, zinc chromate, strontium chromate, white carbon, clay, talc, ultramarine blue, precipitated barium sulfate, barite powder, calcium carbonate, white lead, navy blue and white, Prussian blue, manganese violet, aluminum powder, and brass powder; and organic pigments, such as C.I. Pigment Blue 15 and 17, C.I. Pigment Blue 17 and 27, C.I. Pigment Red 5, 22, 38, 48, 49, 53, 57, 81, 104, 146, and 245, C.I. Pigment Yellow 1, 3, 12, 13, 14, 17, 34, 55, 74, 95, 166, and 167, C.I. Pigment Orange 5, 13, and 16, C.I. Pigment Violet 1, 3, 19, 23, and 50, and C.I. Pigment Green 7.

Examples of the colored resin fine particles or the dispersion thereof include: a dispersion of colored resin fine particles in which the colored resin fine particles are dispersed in water, the colored resin fine particles being composed of at least: a carboxyl group-containing vinyl monomer (A) with a solubility in water of 10 mass% or less as an acidic functional group, an ester monomer (B) of acrylic acid or methacrylic acid and a linear or cyclic alcohol having 2 to 18 carbon atoms, and an basic dye or an oil-soluble dye; and a dispersion of colored resin fine particles in which the colored resin fine particles are dispersed in water, the colored resin fine particles being composed of: a cyclohexyl (meth)acrylate monomer, and a basic dye or an oil-soluble dye, in which the content of the cyclohexyl (meth)acrylate monomer is 30 mass% or more with respect to the entire polymer component constituting the colored resin fine particles, and the content of the basic dye or the oil-soluble dye is 15 mass% or more with respect to the entire polymer component.

Examples of the thermochromic pigment include a thermochromic pigment produced by microencapsulating a thermochromic composition to achieve a predetermined average particle size (e.g., 0.1 to 10 $\mu$m), the thermochromic composition containing at least: a leuco dye functioning as a color former, a color developer serving as a component having an ability to develop a color of the leuco dye, and a discoloration temperature adjuster capable of controlling a discoloration temperature in coloration of the leuco dye and the color developer.

Examples of the photochromic pigment include: photochromic particles composed of at least: one or more selected from photochromic dyes (compounds) and fluorescent dyes, and a resin such as a terpene phenolic resin; and a photochromic pigment produced by microencapsulating a photochromic composition to achieve a predetermined average particle size (e.g., 0.1 to 10 $\mu$m), the photochromic composition containing at least: one or more selected from photochromic dyes (compounds) and fluorescent dyes, an organic solvent, and an additive, such as an antioxidant, a light stabilizer, or a sensitizer.

These coloring materials can be used alone or in combination of two or more thereof.

Desirably, the (total) (solids) content of these coloring materials is preferably 0.1 to 40 mass% and further preferably 1 to 30 mass% with respect to the total amount of the aqueous ink composition. When the content of the coloring material of 0.1 mass% or more, sufficient drawn line density can be achieved. When the content is 40 mass% or less, an increase in viscosity is suppressed, and the ink has good fluidity, which is preferred.

Acetylene-Based Surfactant

In the present invention, the acetylene-based surfactant to be preferably used can lower the dynamic surface tension of the ink and further lower the outflow resistance of the ink, and thus can further improve the followability and further contain the acetylene-based surfactant for obtaining a writing line without blurring. Examples thereof include at least one selected from acetylene glycols, alkylene oxide adducts thereof, and acetylene alcohols.

Specific examples of the acetylene glycols, alkylene oxide adducts thereof, and acetylene alcohols that can be used include at least one selected from Formulas (I) to (VI) set forth below:

[Chem. 1]

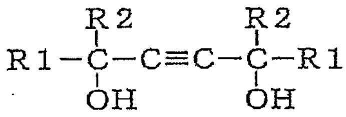

········ (I)

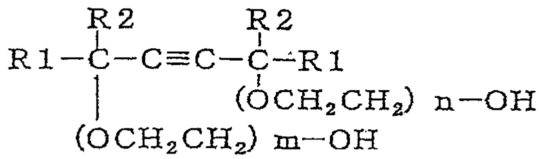

········ (II)

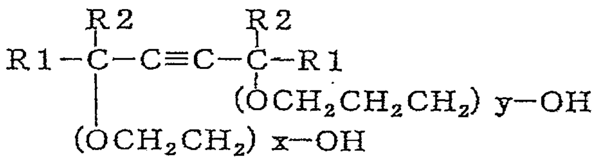

········ (III)

where in Formulas (I) to (III), R1 and R2 are each a linear or branched alkyl group having 1 to 8 carbon atoms, and m, n, x, and y are each 1 to 100.

[Chem. 2]

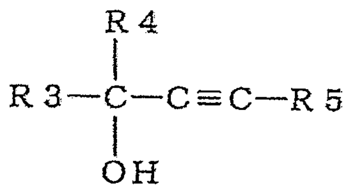

········ (IV)

$$R3-C\equiv C-R6-OH$$

········ (V)

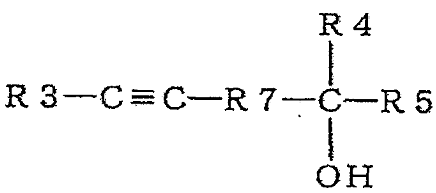

········ (VI)

where in Formulas (IV) to (VI), R3, R4, and R5 represent hydrogen atoms or linear or branched carbon chains having 0 to 10 carbon atoms which may contain unsaturated bonds, R6 represents an alkylene group having 2 to 5 carbon atoms, and R7 represents an alkylene group having 1 to 5 carbon atoms.

Examples of the acetylene glycols that can be used and the alkylene oxide adduct thereof include an acetylene glycol represented by Formula (I), a derivative (adduct) of an acetylene glycol represented by Formula (II) to which ethylene oxide (EO) is added, and a derivative (adduct) of an acetylene glycol represented by Formula (III) to which ethylene oxide (EO) or propylene oxide (PO) is added. Examples of the linear or branched alkyl group having 1 to 8 carbon

atoms represented by R1 and R2 in Formulas (I) to (III) include a methyl group, an ethyl group, a propyl group, an isopropyl group, an n-butyl group, an isobutyl group, a t-butyl group, a pentyl group, a hexyl group, a heptyl group, and an octyl group.

Examples of the acetylene glycol of Formula (I) include 2,5,8,11-tetramethyl-6-dodecyne-5,8-diol, 5,8-dimethyl-6-dodecyne-5,8-diol, 2,4,7,9-tetramethyl-5-dodecyne-4,7-diol, 8-hexadecyne-7,10-diol, 7-tetradecyne-6,9-diol, 2,3,6,7-tetramethyl-4-octyne-3,6-diol, 3,6-diethyl-4-octyne-3,6-diol, and 2,5-dimethyl-3-hexyne-2,5-diol. Examples of the alkylene oxide (EO, PO) adduct of the acetylene glycol of Formula (II) and Formula (III) include alkylene oxide derivatives of the acetylene glycol.

The method for synthesizing each compound listed in Formulas (I) to (III) is known, and each compound can be obtained by various methods, or a commercially available compound may be used. Examples of the acetylene glycols and alkylene oxide adducts thereof include commercially available SURFYNOL 104 [2,4,7,9-tetramethyl-5-dodecyne-4,7-diol, manufactured by Nissin Chemical Industry Co., Ltd.], SURFYNOL 104 series, such as SURFYNOL 104E (ethylene glycol), 104H (ethylene glycol), and 104A (2-ethylhexanol) obtained by diluting SURFYNOL 104 with various solvents, and SURFYNOL 104S containing silica particles, and EO adducts of SURFYNOL 104, such as SURFYNOL 420, 440, 465, 485, DF110D, DF37, DF58, DF75, and DF220.

The acetylene alcohols represented by Formulas (IV) to (VI) have an acetylene group (-C=C-) and a hydroxyl group (-OH) in the molecular structure.

Examples of R3, R4, and R5 in General Formulas (IV) to (VI) include a hydrogen atom, an alkyl group having a straight chain or a branch, an alkenyl group, an aryl group, and an aralkyl group. Here, the alkyl group and the alkenyl group may be linear, branched, or cyclic, and examples thereof include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, and a cyclohexenyl group. The aryl group may have a substituent such as a lower alkyl group on the aromatic ring, and examples thereof include a phenyl group, a tolyl group, a xylyl group, and a naphthyl group. Further, the aralkyl group may have a substituent such as a lower alkyl group on the aromatic ring, and examples thereof include a benzyl group, a phenethyl group, and a naphthylmethyl group. R6 in Formula (V) represents an alkylene group having 2 to 5 carbon atoms, and the alkylene group may be any of a linear form, a branched form, and a cyclic form, but a linear form is particularly preferable. Examples of the linear alkylene group include an ethylene group, a trimethylene group, a tetramethylene group, and a pentamethylene group.

Further, R7 in General Formula (VI) represents an alkylene group having 1 to 5 carbon atoms, the alkylene group is a methylene group (carbon count: 1), and the alkylene group having 2 or more carbon atoms is the same as R6 in General Formula (V).

Specific examples of the acetylene alcohols of Formula (IV) or derivatives thereof include at least one of 2-butyne-1-ol, 3-butyne-2-ol, 2-decyne-1-ol, 3,6-dimethyl-1-heptyne-3-ol, 3,5-dimethyl-1-hexyne-3-ol, 3,4-dimethyl-1-pentyne-3-ol, 1,1-diphenyl-2-propyne-1-ol, 3-ethyl-1-heptyne-3-ol, 4-ethyl-1-octyne-3-ol, 3-ethyl-1-pentyne-3-ol, 1-ethynyl-1-cyclohexanol, 9-ethynyl-9-fluorenol, 1-heptyne-3-ol, 2-heptyne-1-ol, 1-hexyne-3-ol, 2-hexyne-1-ol, 3-methyl-1-butyne-3-ol, 3-methyl-1-pentene-4-yn-3-ol, 3-methyl-1-pentyne-3-ol, 2-methyl-4-phenyl-3-butyne-2-ol, 1-octyne-3-ol, 1-pentyne-3-ol, 2-pentyne-1-ol, 1-phenyl-2-propyne-1-ol, 3-phenyl-2-propyne-1-ol, 2-propyne-1-ol, and 1,1,3-triphenyl-2-propyne-1-ol. Specific examples of the acetylene alcohols of Formula (V) or derivatives thereof include at least one of 3-butyne-1-ol, 3-decyne-1-ol, 9-decyne-1-ol, 3-heptyne-1-ol, 3-hexyne-1-ol, 5-hexyne-1-ol, 3-nonyne-1-ol, 3-octyne-1-ol, 3-pentyne-1-ol, 4-pentyne-1-ol, 5-phenyl-4-pentyne-1-ol, and 10-undecyne-1-ol.

Specific examples of the acetylene alcohols of Formula (VI) or derivatives thereof include at least one of 4-heptyne-2-ol, 5-heptyne-3-ol, 5-hexyne-3-ol, and 4-pentyne-2-ol. Among the specific examples of Formulas (IV) to (VI), 3-methyl-1-butyne-3-ol, 3-methyl-1-pentyne-3-ol, and 3,5-dimethyl-1-hexyne-3-ol are preferably used from the viewpoint of usability, cost, safety, and further exhibiting the effects of the present invention. The method for synthesizing each compound listed in Formulas (IV) to (VI) is known, and each compound can be obtained by various methods, or a commercially available compound may be used. Examples of the acetylene alcohols include SURFYNOL 61 (3,5-dimethyl-1-hexyne-3-ol), OLFINE A (2,5-dimethylhexane-2,5-diol), OLFINE B (3-methyl-1-butyne-3-ol), OLFINE P (3-methyl-1-pentyne-3-ol), OLFINE PD-002W, EXP. 4200, WE-003, SPC, and other OLFINE systems manufactured by Nissin Chemical Industry Co., Ltd., which are commercially available.

The content (active ingredient amount) of these acetylene-based surfactants is preferably 0.01 to 0.5 mass%, further preferably 0.05 to 0.5 mass%, particularly preferably 0.1 to 0.3 mass% with respect to the total amount of the aqueous ink composition.

When the content of the acetylene-based surfactant is 0.01 mass% or more, the outflow resistance of the ink can be further reduced, and thus the followability can be further improved, and a writing line without blurring can be obtained. On the other hand, when the content of the acetylene-based surfactant is 0.5 mass% or less, the effect of containing the acetylene-based surfactant can be maximized.

Additional Component

The aqueous ink composition for a writing utensil of the present invention may contain each component usually used for an aqueous ink, for example, a dispersant, a surfactant, a glycol ether, a hydrophilic polyhydric alcohol, a water-soluble betaine, a rust inhibitor, a preservative or a bacteriostatic agent, a pH adjusting agent, and the like, as necessary, within the range having the effect of the present invention, in addition to the above-described water-insoluble celluloses, evaporation inhibitor, coloring material to be preferably used, acetylene-based surfactant, and water (tap water, purified water, distilled water, ion-exchanged water, pure water, and the like) which is a solvent as a balance, as long as the ink composition is an aqueous ink composition having a vapor pressure at 50°C of less than 12.3 kPa.

The aqueous ink composition can contain a water-soluble resin as the dispersant that can be used. For example, at least one can be selected from water-soluble resins, such as acrylic-based resins, polyvinyl alcohol, polyethylene oxide, and urethane-based resins; and resin emulsions, such as acrylic emulsions, vinyl acetate-based emulsions, urethane-based emulsions, and polyolefin-based emulsions.

The surfactant that can be used is not particularly limited, and at least one surfactant selected from fluorine-based surfactants and silicone-based surfactants can be used.

Examples of the glycol ethers that can be used include glycol ethers such as ethylene glycol monomethyl ether and diethylene glycol monomethyl ether, and these can be used alone or as a mixture of two or more thereof.

Examples of the hydrophilic polyhydric alcohol that can be used include pentaerythritol, trimethylolethane, and trimethylolpropane. The water-soluble betaine (amphoteric compound) is a compound having a positive charge and a negative charge that are not adjacent to each other in the same molecule and having no charge as a whole molecule. The positively charged site is preferably a quaternary ammonium cation. Examples of such a betaine include, but are not particularly limited to, trimethylglycine, γ-butyrobetaine, homarine, trigonelline, carnitine, homoserine betaine, valine betaine, lysine betaine, ornithine betaine, alanine betaine, stachydrine, and glutamic acid betaine. Among these, trimethylglycine, γ-butyrobetaine, or carnitine is preferable, and trimethylglycine is more preferable. The use of such a water-soluble betaine tends to further improve the effects of the present invention. One water-soluble betaine may be used alone, or two or more thereof may be used in combination.

For the antiseptic or antibacterial agent, phenol, sodium omadine, sodium benzoate, benzisothiazoline, or a benzimidazole compound can be used. Examples of the rust inhibitor that can be used include benzotriazole, tolyltriazole, dicyclohexylammonium nitrite, and saponins.

For the pH adjuster, an amine compound such as triethanolamine, diethanolamine, monoethanolamine, dimethylethanolamine, morpholine, or triethylamine, ammonia, or a hydroxide of an alkali metal, such as sodium hydroxide, potassium hydroxide, or lithium hydroxide can be used.

In the present invention, the aqueous ink composition for a writing utensil contains at least the water-insoluble celluloses and the evaporation inhibitor, and the composition has a vapor pressure at 50°C of less than 12.3 kPa, preferably 10.3 kPa or more and less than 12.3 kPa, in terms of evaporation suppression and reduction of thin spots on a drawn line. As a preferable embodiment, the aqueous ink composition for a writing utensil contains the water-insoluble celluloses, the evaporation inhibitor, preferably a coloring material, and an acetylene-based surfactant, and by suitably combining these components, an aqueous ink composition having a vapor pressure at 50°C of less than 12.3 kPa, particularly preferably 10.3 kPa or more and 12.0 kPa or less can be preferably adjusted.

In the present embodiment (including Examples described below), the "vapor pressure at 50°C" refers to a value measured by a static method (kPa).

In the present invention, the effect of the present invention can be exhibited by using the aqueous ink composition having a vapor pressure at 50°C of less than 12.3 kPa, particularly preferably 10.3 kPa or more and 12.0 kPa or less with the above-described blending composition.

When the vapor pressure of the aqueous ink composition at 50°C is less than 12.3 kPa, the effect of suppressing evaporation is enhanced, and the issue of the dry-out of the pen tip when the cap is removed is solved, which is preferable.

In the present invention, the particle size of the water-insoluble substance (in ink compositions such as celluloses and coloring materials) in the aqueous ink composition is preferably 3 μm or less, preferably 2 μm or less, and further preferably from 1.5 to 0.1 μm from the viewpoint of stability and ink flowability.

In the present invention (including Examples and the like), the "particle size" is a value of D90 calculated on a volume basis with a refractive index of 1.58 using a laser diffraction/scattering type particle size distribution measuring apparatus LA960 (manufactured by HORIBA, Ltd.).

Further preferably, in the present invention, when the viscosity of the aqueous ink composition is too high, the dischargeability from a pen body is deteriorated, and when the viscosity is too low, the writing line may run, and thus the viscosity is, at 25°C at a shear rate of 191.5 $s^{-1}$ (50 rpm), preferably 25 mPa·s or less, and a ratio of a viscosity value at 38.3 $s^{-1}$ to a viscosity value at 191.5 $s^{-1}$ is preferably 1.5 or less. Further preferably, the viscosity is desirably in a range of 1 to 20 mPa·s, and the ratio of the viscosity values is desirably in a range of 1.0 to 1.5.

The viscosity range and the like can be adjusted by combining each of the above-described components, water,

and the like to be used to have a suitable content, and by adjusting suitable stirring conditions, dispersion conditions, and the like.

The aqueous ink composition for a writing utensil of the present invention is obtained by appropriately combining at least the water-insoluble celluloses, the evaporation inhibitor, water, and each of the additional components according to the intended use of the ink for a writing utensil (marking pen, marker pen, etc.), combining the water-insoluble celluloses, the evaporation inhibitor, water, and additional components to have a suitable blending amount (including the above-described preferable embodiment), stirring and mixing them with a stirrer such as a homomixer, a homogenizer, or a disper, and further removing coarse particles in the ink composition by filtration or centrifugation as necessary, thereby obtaining an aqueous ink composition for a writing utensil having a composition in which a vapor pressure at 50°C is less than 12.3 kPa.

In addition, a pH level of the aqueous ink composition to be obtained (at 25°C) is adjusted to preferably from 5 to 10, further preferably from 6 to 9.5, by using a pH adjuster or the like from the viewpoint of usability, safety, stability of the ink itself, and matching with the ink container.

The aqueous ink composition for a writing utensil of the present invention thus configured contains at least a water-insoluble cellulose and an evaporation inhibitor, and the vapor pressure of ink at 50°C is less than 12.3 kPa. Thus, an aqueous ink composition for a writing utensil that highly achieves both durability (water resistance, alcohol resistance, and solvent resistance) and further improvement in writing performance even though the aqueous ink composition is an aqueous ink can be obtained. In the present invention, although the aqueous ink composition is an aqueous ink, water-insoluble celluloses and the like are not dissolved while being present in a dispersed state in the ink unlike resins, and thus have excellent solvent resistance while also having water resistance. To exhibit these effects, an evaporation inhibitor is further used in combination, and the vapor pressure of the ink is controlled to be less than the above-described value. Thus, even during long-term storage, the viscosity change is small without being affected by volatilization of the ink, and a good dispersibility state of water-insoluble celluloses and the like can be maintained to exhibit the above-described action and effect. In the present invention, if the vapor pressure value of the ink composition of the above-described composition is not controlled, when the ink volatilizes, the ink is concentrated, the connection of the hydrogen bonds of the water-insoluble celluloses becomes stronger, the viscosity is increased, writing failure is likely to occur, and the water-insoluble celluloses are aggregated. Thus, to suppress these phenomena and the like and to maximize the effect of the present invention, the vapor pressure value of the ink composition in the above-described blending composition is adjusted to less than 12.3 kPa.

Even when a fixing resin or a non-polar solvent is not used, both the durability (water resistance, polyalcohol) and the good writing performance can be achieved and maintained at high degree even after long-term storage. Thus, the aqueous ink composition for a writing utensil suitable for a marking pen, a marker pen, and the like which are also excellent to the recent environmental action (less environmental load) can be obtained.

Further, when the acetylene-based surfactant is preferably used, the dispersibility of the water-insoluble celluloses is not destroyed even when the ink is concentrated, and the aqueous ink composition for a writing utensil, in which the wettability to a paper surface or a member (writing element such as a pen tip) is more appropriately improved, and a good balance between drying property and writing performance is easily obtained, can be obtained.

The writing utensil of the present invention is characterized by being loaded with the aqueous ink composition for a writing utensil having the composition (property) described above.

Examples of the writing utensil include a marking pen. a marker pen, a marker, a brush pen, and the like with a fiber tip, a felt tip, a plastic tip, or the like as a pen tip. The ink supply form to the pen tip is not particularly limited such as a batting type or a direct liquid type, and those having various structures and shapes can be used.

An embodiment of a writing utensil having each structure that can be used will be further described with reference to FIGS. 1 to 13. Writing utensil A of FIGS. 1 to 3 includes drawings illustrating an example of an embodiment of a direct liquid type writing utensil into which the aqueous ink composition for a writing utensil having the above-described configuration is directly loaded in an ink tank of a barrel, in which FIGS. 1(a) to 1 (c) are drawings in a state where a cap is attached, FIGS. 2(a) to 2(d) are drawings in a state where the cap is removed, and FIGS. 3(a) and 3(b) are drawings illustrating a writing state.

The writing utensil A of this embodiment is loaded with the aqueous ink for a writing utensil having the above-described property. As illustrated in FIGS. 1(a) to 1(c), an ink tank 11 is provided in a barrel 10, and an ink reservoir member (collector member) 12 for temporarily reserving the overflow ink according to a change in pressure in the ink tank 11 is provided in the barrel 10.

That is, in the writing utensil A, the ink reservoir member 12 is provided in front of the ink tank 11. The ink reservoir member 12 is formed in a watertight manner by fitting a disk-shaped plate-shaped portion 13 disposed to expand perpendicularly to a central cylindrical portion rear end of a substantially cylindrical shape at the center to the inner periphery of the barrel 10. A plurality of thin disk-shaped thin plate portions 14 are further disposed in front of the plate-shaped portion 13 at the rear end, and an ink storage portion in which an ink storage groove (lateral groove) is formed by capillary force in a gap between the thin plate portions 14, 14, 14... is formed.

The barrel 10 is molded into a cylindrical shape using, for example, a resin containing polypropylene and

functions as the writing utensil main body (barrel body). Although the barrel 10 is molded to be opaque or transparent (and translucent), either may be adopted from the viewpoint of appearance and practicality.

Further, in the plurality of thin plate portions 14, slit-shaped ink guide grooves (vertical grooves) 15 are formed along the length direction of the ink reservoir member 12 with the central tubular portion being left. The groove width of the ink guide groove 15 is made smaller than any groove width of the ink storage groove 16, the ink is always filled in the groove, and the excess ink when the pressure in the ink tank 11 rises can be immediately guided into the ink storage groove 16. The ink guide groove 15 is formed between the thin plate portions 14 and is continuous with the opening groove 20 of the plate-shaped portion 13 open into the ink tank 11.

In the ink reservoir member 12, the thin plate portion 14 is integrally molded in a structure connected and supported by a hollow central cylinder portion 12a.

A relay core 25 made of a fiber core or the like is housed in the hollow portion of the inner periphery of the 12a of the central cylindrical portion, and the aqueous ink composition for a writing utensil of the present invention in the ink tank 11 is supplied to a pen tip 30 integrally formed with the relay core 25 at the tip end portion of the barrel 10 by the relay core 25.

The pen tip 30 integrally formed with the relay core 25 includes, for example, a fiber bundle composed of: one or a combination of two or more of natural fiber, animal hair fiber, a polyacetal-based resin, an acrylic-based resin, a polyester-based resin, a polyamide-based resin, a polyurethane-based resin, a polyolefin-based resin, a polyvinyl-based resin, a polycarbonate-based resin, a polyether-based resin, and a polyphenylene-based resin; a processed fiber bundle, such as felt; and a porous body, such as sponge, resin particles, and a sintered body.

The pen tip 30 has shapes 31, 31 in which both side surfaces are cut out in a semicircular arc shape, and the tip thereof has a shape having a writing portion 32 in an inclined shape (knife cut shape) so as to have an inclination that facilitates writing. The inclination of the writing portion 32 is set as appropriate in accordance with the usability of writing or the like. In addition, the writing portion 32 is desired to be a writing portion to produce a line width of preferably 1 mm or more, further preferably 2 mm or more. The relay core 25 and the pen tip 30 may be formed of two components instead of being formed integrally.

The pen tip 30 is preferably formed of a fiber bundle core, a fiber core, a sintered core, a felt core, a sponge core, or an inorganic porous core, and is particularly preferably formed of a fiber core, from the viewpoints of deformation moldability and productivity. The porosity, size, and hardness of the pen tip 30 to be used vary depending on the type of writing utensil (direct liquid type, batting type, etc.). For example, the porosity is preferably 30 to 70%. In the present invention, the "porosity" is calculated as follows. First, a writing core having a known mass and apparent volume is immersed in water and sufficiently impregnated with water, and then the mass is measured in a state of being taken out from water. From the measured mass, the volume of water impregnated into the writing core is calculated. With the assumption that the volume of water is the same as the pore volume of the writing core, the porosity is calculated from the following formula:

$$\text{Porosity (unit: \%)} = \text{(volume of water)/(apparent volume of pen tip 30)} \times 100$$

A cutout 17 serving as an air passage is formed continuously in the longitudinal direction of the ink reservoir member 12 on the outer periphery of the thin plate portion 14 of the ink reservoir member 12. The pen tip 30 is mounted on a large-diameter cylindrical portion 12b extending to the tip of the ink reservoir member 12. A cylindrical holder 35 is fitted between the outer periphery of the front portion of the ink reservoir member 12 and the inner periphery of the front portion of the barrel 10, including the large-diameter cylindrical portion 12b, to suppress the ink reservoir member 12 from coming off the barrel 10.

An air passage is formed between the groove 12c of the outer periphery of the large-diameter cylindrical portion 12b and the inner periphery of the holder 35, and communicates with the opening groove 20 through the air passage of the cutout 17. Thus, the air and liquid in the ink tank 11 are smoothly replaced.

A bottomed cylindrical cap 40 covering the pen tip 30 when the writing utensil is not used is detachably provided to cover the installation part of the ink reservoir member 12 of the barrel 10 to the middle.

The cap 40 has a structure in which a lid-like member 41 at the top is fitted to a side cylindrical member 42, and an air vent hole is formed from the tip to the inside of the lid-like member 41, although not illustrated.

A bowl-shaped inner cap 45 covering the pen tip 30 and fitted to the tip of the holder 35 is provided inside the cap 40 to be movable back and forth with a spring 46. When the cap 40 is detachably attached to the barrel 10, the inner cap 45 is first fitted to the tip of the holder 35, but in this state, the cap 40 is not completely fitted to the barrel 10. When the cap 40 is further pushed in, the locking mechanism inside the opening end of the cap 40 is fitted to the barrel while pressing the inner cap 45 by the spring 46, and is fixed.

As illustrated in FIG. 1, the barrel 10 is provided with a partition wall 18 at a position closer to the center from the end (rear end) opposite to the side where the ink reservoir member 12 is disposed, and the space in the barrel 10 between a thick plate-like portion 19 at the rear end of the ink reservoir member 12 and the partition wall 18 serves as the ink tank 11.

A rear end opening 10a that is open in a cylindrical shape behind the partition wall 18 of the barrel 10 is closed by a tail plug 50. The tail plug 50 has a substantially cylindrical shape with an open front, and has a closed rear end and a flange 51 protruding laterally. A plurality of ribs 52, 52 are formed on the side surface of the tail plug 50 to protrude therefrom to enhance the adhesion with the inside of the rear end of the barrel.

At the rear end of the barrel 10 to which the tail plug 50 is fitted to seal the barrel, any number of vertical grooves 53 are formed as a structure for venting air in the inner peripheral surface. Without the longitudinal groove 53, the internal pressure behind the partition wall 18 in the barrel 10 tends to increase according to the pushing distance of the tail plug 50 to suppress the tail plug from advancing when the tail plug 50 is pushed into the open rear end of the barrel to be fitted. However, with the longitudinal groove 53, the air escapes from the longitudinal groove, and thus, the internal pressure does not increase, and the tail plug 50 can advance without difficulty and be fitted tightly.

In the direct-liquid writing utensil A according to the embodiment of FIGS. 1 and 2 configured as described above, the aqueous ink for writing utensil having the above-described property is directly loaded in the ink tank 11. As illustrated in FIGS. 3(a) and 3(b), writing (mark) or the like can be performed as a marking pen with the pen tip 30, and the writing utensil becomes a writing utensil suitable for a marking pen or the like that can highly achieve and maintain both durability (water resistance, alcohol resistance) and good writing performance even after long-term storage.

FIGS. 4(a) to 4(d) are diagrams each illustrating an example of an embodiment of a batting type writing utensil. FIGS. 4(a) to 4(d) are diagrams each illustrating a state in which a cap having the same structure as the cap 40 of FIG. 1 is removed. The same reference numerals are given to the same components as those of the writing utensil A illustrated in FIGS. 1 and 2, and the description thereof will be omitted.

A writing utensil B of the present embodiment is one in which an ink absorber 60 having the above-described configuration in which the aqueous ink composition for a writing utensil is absorbed is housed in the barrel (writing utensil main body) 10 on the front side (pen tip 30 direction) of the partition wall 18. A structure similar to that in which the relay core 25 and the pen tip 30 used in the writing utensil A are integrated, that is, a structure in which ink is supplied to the pen tip 30 by capillary force through the relay core 25 mounted in the insertion hole 61 of the ink storage body 60 is adopted. The pen tip 30 is fitted to the front opening of the barrel 10 with a joint member 65 fixed by fitting.

The ink absorber 60 is impregnated with the aqueous ink composition for a writing utensil having the property described above and includes, for example, a fiber bundle composed of: one or a combination of two or more of natural fiber, animal hair fiber, a polyacetal-based resin, an acrylic-based resin, a polyester-based resin, a polyamide-based resin, a polyurethane-based resin, a polyolefin-based resin, a polyvinyl-based resin, a polycarbonate-based resin, a polyether-based resin, and a polyphenylene-based resin; a processed fiber bundle, such as felt; and a porous body, such as sponge, resin particles, and a sintered body.

In the batting type writing utensil B according to the embodiment of FIG. 4 configured as described above as well, as illustrated in FIGS. 3(a) and 3(b), writing (mark) or the like can be performed as a marking pen with the pen tip 30, and the writing utensil becomes a writing utensil suitable for a marking pen or the like that can highly achieve and maintain both durability (water resistance, alcohol resistance) and good writing performance even after long-term storage.

In each of the writing utensils of the embodiments A and B, the writing utensils may include the pen tip 30 of a marking pen type, but the pen tip may be of a marker pen type as a rod-shaped pen tip, and the shape and structure of the pen tip are not particularly limited.

FIGS. 5 to 8 are drawings of a batting type writing utensil C on which an ink composition containing at least a water-insoluble cellulose and an evaporation inhibitor and having a property that the vapor pressure of ink at 50°C is less than 12.3 kPa is loaded as the aqueous ink composition for a writing utensil. FIG. 5(a) is a front view, FIG. 5(b) is a front-view longitudinal sectional view, FIG. 5(c) is a longitudinal sectional view as viewed from a direction developed at 90° in FIG. 5(b), FIGS. 6(a) to 6(c) are drawings illustrating an example of the writing utensil in a state where a cap of the writing utensil of FIG. 5 is removed. FIG. 7 is a component development view of the writing utensil of FIG. 5, and FIGS. 8(a) and 8(b) are perspective views illustrating each writing portion in the writing utensil of FIG. 5.

The batting type writing utensil C is a double-headed marking pen including a pen tip 75 and a pen tip 90 at each ends. As illustrated in FIGS. 5 to 8, the writing utensil includes a barrel 70, a cylindrical batting 73 in which the ink composition having the above-described property is absorbed is stored in the barrel 70, and the pen tip 75 and the pen tip 90 fixed to each ends of the barrel 70. Reference numeral 95 denotes a cap integrally including a clip 95a covering the pen tip 75, and reference numeral 96 denotes a cap covering the pen tip 90.

To improve the ink outflow property, the pen tip 75 has a knife cut writing portion 76 on the tip side. Slits 77, 77... are formed at predetermined intervals on the rear side of the writing portion 76 to have flexibility. The rear side (batting side) is a porous body core 78 thicker than the writing portion side, and the rear side of the porous body core 78 is a triangular columnar portion 79 to be fitted in a recess 73a on the end side of the batting 73.

The pen tip 75 is fixed to the tip side of the barrel 70 by a front barrel 80 and a refill tail plug 85. The front barrel 80 is cylindrical, including a flange portion 81 having a vent opening 81a on the outer peripheral surface on the rear side, a large-diameter portion 83 having a vent groove 82 in the axial direction, and a small-diameter portion 84 holding the writing portion 76 on the front side of the large-diameter portion 83. The refill tail plug 85 is attached to the inside of the large-diameter portion 83 of the front barrel 80 that holds the end portion side (front side) of the inner fiber 73 and is fitted to the front side inside the barrel 70. The pen tip 75 having the above-described configuration is fixed to the front side (one end side) of the barrel 70. A holding portion 71 for fixing the pen tip 90 is formed on the rear side (the other end side) of the barrel 70. The pen tip 90 has a writing portion 91 with a small diameter and a large diameter portion 92, and an annular fitting groove 93 to be fitted to the fitting portion 72 inside the holding portion 71 of the barrel 70 is formed between the writing portion 91 and the large diameter portion 92. The rear side of the porous core 78 is formed as a triangular prism-shaped portion 79 to be fitted to the recess 73a on the end side of the inner fiber 73. The rear side of the large-diameter portion 92 of the pen tip 90 is formed as a triangular prism-shaped portion 94 to be fitted to the recess 73b on the end side of the inner fiber 73.

The components (the barrel 70, the batting 73, the pen tip 75, the front barrel 80, the refill tail plug 85, and the pen tip 90) provided in this manner assemble the batting type writing utensil D. The wide pen tip 75 is inserted from the batting side to the cap 95 side, and the refill tail plug 85 receives a backward load due to writing pressure, thereby suppressing backward flexing during writing.

The pen tip 90 having a small diameter can suppress flexing backward (toward the batting) during writing by fitting the fitting groove 93 between the writing portion 91 having a small diameter and the large-diameter portion 92 with the fitting portion 72 of the holding portion 71 of the barrel 70.

In addition, by providing at least one slit 77 in the radial direction of the writing portion 76 of the pen tip 75 (three slits on the left and right sides, that is, six slits in total in the drawing), the pen tip 75 can be easily deformed, and the pen tip 75 can be suppressed from being damaged by an excessive writing load and can provide various writing feels. Further, the refill tail plug 85 is provided to make the pen tip 75 replaceable, and thus, the pen tip 75 can be easily replaced when worn. The cap 95 covering the pen tip 75 is detachably attached to the outer periphery of the large-diameter portion 83 of the front barrel 80, and the cap 96 covering the pen tip 90 is detachably attached to an outer peripheral portion 71a of the holding portion 71 on the rear side of the barrel 70.

In the double-headed batting type writing utensil D including the pen tip 75 and the pen tip 90 at each ends in FIGS. 5 to 8 configured as described above as well, as illustrated in FIGS. 5(a) to 5(c), the batting 73 is supplied to the writing portion 76 of the pen tip 75 and the writing portion 91 of the pen tip 90 by the capillary force. Thus, writing (marking) or the like can be performed as a marking pen and a writing device, and similarly to the writing utensil A and B in FIGS. 1 to 4 described above, writing (marking) or the like can be performed as marking pen by the pen tips 75 and 90, and the writing utensil is suitable for a marking pen or the like capable of highly achieving and maintaining both durability (water resistance and alcohol resistance) and good writing performance even after long-term storage.

The outer diameter of the pen tip on the side of the barrel is larger than the outer diameter on the side of the writing portion. Thus, the outflow performance of the ink can be improved, the writing flow rate to the writing portion can be secured, and the occurrence of blurring due to high-speed writing or the like can be suppressed. Further, with the slit, the writing portion is flexible in the writing direction. Thus, it is possible to suppress damage to the pen tip due to an excessive writing load and to provide various writing feels.

FIG. 9 illustrates the batting type writing utensil D in another form. The writing utensil D has the same configuration as the batting type writing utensil C of the embodiment of FIGS. 5 to 8, but the pen core on the narrow side in the embodiment of FIGS. 5 to 8 is a ballpoint pen tip 91a. A writing line can be obtained by the writing portion (ball portion) at the tip of the ballpoint pen tip 91a thinner than the pen core.

In the batting type writing utensil D of FIG. 9 configured as described above as well, the writing (marking) or the like can be performed with the thick side pen tip 75 as a marking pen, or the writing can be performed as a ballpoint pen because the thin side pen core ballpoint pen tip 91a is the ballpoint pen tip 91a. Similarly to the writing utensils A to C of FIGS. 1 to 8 described above, the writing utensil is suitable for a marking pen or the like capable of writing (marking) as a marking pen or writing as a ballpoint pen with the pen tip 75, and capable of highly achieving and maintaining both durability (water resistance, alcohol resistance) and good writing performance even after long-term storage.

In the writing utensil in this form, a plurality of writing portions are provided at the pen tip. Thus, the writing utensil having different writing widths can be provided with one barrel.

FIGS. 10 to 13 illustrate a batting type writing utensil E in another form. The writing utensil E is a writing utensil in a form in which a ballpoint pen tip 110 can be attached to a pen tip 100 having no slit based on the form of FIG. 5. The same reference numerals are given to the same structures as those of the writing utensil C including the pen tip 75 in FIG. 5, and different reference numerals are given only to different structures (configurations).

As illustrated in FIGS. 13(a) to 13(g), the pen tip 100 has a linear opening 115 in the axial direction, to which an annular ballpoint pen tip 110 is fixed by press-fitting or the like in the axial direction of the front outer periphery. The tip side of the opening 115 is an enlarged hole 115a, and the tip side of the ballpoint pen tip 110 is attached to the hole.

The writing utensil E is a single-headed marking pen having the pen tip 100 at one end. The other end of the barrel 70 is a tail plug 74. The rear side of the writing portion 76 is not formed with a slit, but the porous body 77a is integrally connected to a large-diameter porous core 78.

By providing the ballpoint pen tip 110 at the pen tip 100, the writing width can be easily switched by the reversing

operation of barrel at an angle of approximately 180° as illustrated in FIG. 12. The ballpoint pen tip 110 is attached by being press-fitted into the opening 115 of the pen tip 100.

In the batting type writing utensil E of the embodiment of FIGS. 12 and 13 configured as described above as well, writing (marking) or the like can be performed as a marking pen, or writing can be performed as a ballpoint pen, and similarly to the writing utensils A to D of FIGS. 1 to 11 described above, the writing utensil is suitable for a marking pen or the like capable of performing writing (marking) or the like as a marking pen with the pen tip 100 and highly achieving and maintaining both durability (water resistance, alcohol resistance) and good writing performance even after long-term storage. Moreover, by providing a plurality of writing portions of a marking pen and a ballpoint pen at the pen tip, a writing utensil having different writing widths can be provided with one barrel.

The writing utensil of the present invention is not limited to the writing utensils A to E of the above-described embodiments. As long as the aqueous ink composition for a writing utensil contains at least a water-insoluble cellulose and an evaporation inhibitor, and has a vapor pressure of ink at 50°C of less than 12.3 kPa, the configuration of other components for a writing utensil, an ink supply mechanism, and the like are not particularly limited. The writing utensil may be a direct-liquid type writing utensil or a valve type writing utensil including a collector mechanism in which ink is directly loaded into an axial barrel (tank) serving as a writing utensil main body. Further, a marking pen is presented in the above-described embodiments, but the aqueous ink composition for a writing utensil can be suitably used for a marker pen, a white board marker, and the like.

## Examples

[Examples 1 to 9 and Comparative Examples 1 to 3: Aqueous Ink Composition for Writing Utensil]

Each aqueous ink composition for a writing utensil was prepared by an ordinary method according to the blending formulation presented in Table 1 below.

The D90 particle size (μm), the viscosity (25°C: mPa·s) at a shear rate of 191.5 $s^{-1}$ 50 rpm, and the viscosity ratio (38.3 $s^{-1}$/191.5 $s^{-1}$) of each of the obtained aqueous ink compositions for a writing utensil were measured by the following measurement methods. These results are presented in Table 1 below.

In addition, the obtained aqueous ink composition for a writing utensil was loaded into a writing utensil having the configuration described below. Using each of the obtained writing utensils, durability (water resistance), durability (alcohol resistance), writing following property, and writing performance over time were evaluated by the following evaluation methods. These results are presented in Table 1 below.

[D90 Particle Size Measurement Method (μm)]

The particle size distribution of the aqueous ink composition for a writing utensil was measured using a laser diffraction/scattering type particle size distribution measuring apparatus (LA-960, manufactured by HORIBA, Ltd.). As the refractive index used for the measurement, the refractive index 1.58 of cellulose was used.

[Method for Measuring Viscosity (25°C: mPa·s) at Shear Rate of 191.5 $s^{-1}$ (50 rpm) and Viscosity Ratio (38.3 $s^{-1}$/ 191.5 $s^{-1}$)]

For each obtained aqueous ink composition for a writing utensil, the ink viscosity (mPa·s) at a shear rate of 191.5 $s^{-1}$ was measured at a cone of 1°34'*R24, a measurement time of 60 seconds, and a measurement temperature of 25°C using a rotational viscometer TVE-25H (manufactured by Toki Sangyo Co., Ltd.). Subsequently, the shear rate was changed to 38.3 $s^{-1}$, and the ink viscosity (mPa·s) was measured for 60 seconds. The viscosity at 50 rpm was defined as the numerical value of the ink viscosity (mPa·s) after 60 seconds at the shear rate of 191.5 $s^{-1}$ of the above-described measurement, and the viscosity ratio was calculated as the ratio of the ink viscosity value at the shear rate of 38.3 $s^{-1}$ to the ink viscosity value at 191.5 $s^{-1}$ obtained in the measurement.

(Configuration of writing utensil) two types of pen tips (different porosities)

A pen tip and a writing utensil in accordance with the configuration below and FIG. 4 were used. The following dimensions, physical properties, and the like of the pen tip were used.

Configuration of pen tip 30 (including relay core 25): fiber bundle core, porosity (2 types) 55%, 62%, maximum writing line width length = 4 mm

Ink absorber 60: PET fiber bundle, porosity 89%, φ6.5 × 80 mm Barrel 10 and the like: made of polypropylene (PP)

(Method for Evaluating Water Resistance)

The water resistance was evaluated through sensory evaluation according to the following criteria in which a drawn line written on a water-resistant PPC sheet using the writing utensil obtained as described above was immersed in water after 3 hours, and a change after 1 day was compared with that without immersing.

Evaluation criteria:

A: No bleeding occurred, and the density of the drawn line did not decrease.
B: Slight bleeding but less decrease in density
C: Severe bleeding occurred. Or the density was significantly decreased.

(Method for Evaluating Alcohol Resistance (Solvent Resistance))

The alcohol resistance was evaluated through sensory evaluation according to the following criteria, in which a line drawn on PPC paper using the writing utensil obtained as described above was left for 3 hours, one drop of ethanol was dropped on the drawn line using a dropper, and the state of change was compared with that without ethanol dropped.

Evaluation criteria:

A: The density of the drawn line hardly decreased.
B: The density decreased slightly.
C: The density decreased significantly. Or, the color material density was hardly confirmed.

(Method for Evaluating Writing Followability)

The writing utensil obtained as described above was used to write a circle on a writing paper conforming to the ISO standard at a triple speed, a double speed, and a normal speed with a free hand, and each writing line was evaluated according to the following evaluation criteria.

Evaluation criteria:

A: There was no blurring at all even in triple speed writing, and smooth and stable writing can be performed.
B: There was no blurring at all in normal speed and double speed writing, and smooth and stable writing can be performed.
C: A clear line break occurred in writing at double speed. Writing at normal speed was possible.

(Method of Evaluating Writing Performance Over Time)

The writing utensil obtained as described above was allowed to stand at 50°C for 1 week. Then free hand circle writing was performed on a writing paper conforming to the ISO standard, and the writing was evaluated according to the following evaluation criteria.

Evaluation criteria:
A: There was no issue in writing.
B: Blurring was observed to a certain degree at the beginning of writing, but there was no inferiority thereafter.
C: The line was slightly blurred. The line was thin.

[Table 1]

(Total amount: 100 mass%)

| | Example | | | | | | | | | Comparative Example | | |
|---|---|---|---|---|---|---|---|---|---|---|---|---|
| | 1 | 2 | 3 | 4 | 5 | 6 | 7 | 8 | 9 | 1 | 2 | 3 |
| Colored resin fine particle dispersion *1 | 40 | 40 | 40 | 40 | 40 | 40 | 40 | 40 | 40 | 40 | 40 | 40 |
| Glycerin | 20 | 10 | 25 | 25 | | 25 | 25 | 25 | 25 | 4 | 20 | 20 |
| Diethylene glycol | | | | | 25 | | | | | | | |

(continued)

| (Total amount: 100 mass%) | | | | | | | | | | | | |
|---|---|---|---|---|---|---|---|---|---|---|---|---|
| | Example | | | | | | | | | Comparative Example | | |
| | 1 | 2 | 3 | 4 | 5 | 6 | 7 | 8 | 9 | 1 | 2 | 3 |
| Cellulose nanofiber (oxidized cellulose) *2 | 0.5 | 2 | 1 | | 1 | 1 | 1 | 1 | 5 | 1 | | |
| Fermented cellulose | | | | 1 | | | | | | | | |
| Polyvinylpyrrolidone (PVP-K90) | | | | | | | | | | | | 2 |
| Acetylene alcohol *3 | | | | | | 0.01 | | | | | | |
| Acetylene glycol *4 | | | | | | | 0.01 | | | | | |
| Acetylene glycol (number of moles of EO added,m + n = 5) *5 | 0.01 | 0.05 | 0.1 | 0.1 | 0.1 | | | | 0.1 | 0.1 | 0.01 | |
| Acetylene glycol (number of moles of EO added, m+n =10) *6 | | | | | | | | 0.1 | | | | |
| Trimethylglycine | 3 | 3 | 3 | 3 | 3 | 3 | 3 | 3 | 3 | | 3 | 3 |
| Water (purified water) | 36.49 | 44.95 | 30.9 | 30.9 | 30.9 | 30.99 | 30.99 | 30.9 | 27.9 | 54.9 | 36.99 | 37 |
| Amount of water converted (total) | 61.49 | 69.95 | 55.9 | 55.9 | 55.9 | 55.99 | 55.99 | 55.9 | 52.9 | 79.9 | 61.99 | 62 |
| Vapor pressure at 50°C (static method: kPa) | 11.7 | 12.1 | 11.4 | 11.4 | 11.0 | 11.4 | 11.4 | 11.4 | 11.3 | 12.4 | 11.7 | 11.6 |
| Porosity of pen tip (%) | 62 | 55 | 62 | 62 | 62 | 62 | 62 | 62 | 62 | 62 | 62 | 55 |
| D90 Particle size measurement (μm) | 1.7 | 0.8 | 1.1 | 1.1 | 1.1 | 1.1 | 1.1 | 1.1 | 2.9 | 1.1 | 0.2 | 0.4 |
| Viscosity (191.5 $S^{-1}$: mPa·s) | 5 | 20 | 18 | 18 | 18 | 18 | 18 | 18 | 27 | 15 | 3 | 20 |
| Viscosity ratio (38.3 $S^{-1}$/191.5 $S^{-1}$) | 1.1 | 1.4 | 1.2 | 1.2 | 1.2 | 1.2 | 1.2 | 1.2 | 1.6 | 1.3 | 1 | 1.3 |
| Weather resistance (water resistance) | A | A | A | A | A | A | A | A | A | A | B | A |
| Weather resistance (alcohol resistance) | A | A | A | A | A | A | A | A | A | A | C | B |
| Writing followability | A | A | A | A | A | A | A | A | B | A | A | B |
| Writing performance over time | A | A | A | A | A | A | A | A | B | C | A | C |

*1 to *6 in Table 1 are as described below.

*1: Dispersion of colored resin fine particles containing oil-soluble dye [oil-soluble dye: Savinyl Blue GLS (manufactured by Clariant AG), resin type: (meth)acrylic acid, solids content : moisture = 15 : 25, solids content proportion:

37.5%, average particle size: 0.7 μm], measurement of the particle size was performed using a particle size distribution measuring machine [value of histogram average particle size (D50) measured by FPAR-1000 (manufactured by Otsuka Electronics Co., Ltd.) and obtained in a scattered light intensity distribution].
*2: RHEOCRYSTA I-2SX, manufactured by DKS Co., Ltd.
*3: Chemical Formula (IV): 3,5-dimethyl-1-hexyne-3-ol
*4: Both R1 and R2 in Chemical Formula (I) are methyl groups.
*5: Both R1 and R2 in Chemical Formula (II) are methyl groups, and m + n = 5
*6: Both R1 and R2 in Chemical Formula (II) are methyl groups, and m + n = 10

As is apparent from the results in Table 1, it was confirmed that the aqueous ink composition for a writing utensil of Examples 1 to 9 within the scope of the present invention and the writing utensil loaded with the aqueous ink composition for a writing utensil are excellent in all of water resistance, alcohol resistance (solvent resistance), writing followability, and writing performance over time as compared with Comparative Examples 1 to 3 outside the scope of the present invention, and it was confirmed that an aqueous ink composition for a writing utensil and a writing utensil using the same having high quality as a writing utensil and high commercial value were obtained. It was also confirmed that the aqueous ink composition for a writing utensil and a writing utensil using the same can achieve and maintain all the water resistance, alcohol resistance, and good writing performance at high degree even after long-term storage without using a fixing resin or a non-polar solvent and have excellent recent environmental action (less environmental load).

Industrial Applicability

The aqueous composition can be suitably used for a pen core-type writing utensil called a marker pen or a marking pen, in which a porous body is mainly used as a writing portion.

Reference Signs List

10 Barrel
11 Ink tank
25 Relay core
30 Pen tip
32 Writing portion
40 Cap

## Claims

1. An aqueous ink composition for a writing utensil, comprising at least a water-insoluble cellulose and an evaporation inhibitor and having a vapor pressure of ink at 50°C of less than 12.3 kPa.

2. The aqueous ink composition for a writing utensil according to claim 1, wherein the ink composition has a viscosity measured at a shear rate of 191.5 $s^{-1}$ (temperature 25°C) of 25.0 mPa·s or less, and a ratio of a viscosity value at 38.3 $s^{-1}$ to a viscosity value at 191.5 $s^{-1}$ of 1.5 or less.

3. The aqueous ink composition for a writing utensil according to claim 1 or 2, further comprising an acetylene-based surfactant.

4. A writing utensil into which the aqueous ink composition for a writing utensil according to claim 1 or 2 is loaded.

5. The writing utensil according to claim 4, wherein a pen tip, which is a writing portion having a capillary force, is provided at one end of a barrel, and the pen tip has an outer diameter on a side of the barrel larger than an outer diameter of the pen tip on a side of the writing portion.

6. The writing utensil according to claim 5, wherein the writing portion of the pen tip is flexible in a writing direction.

7. The writing utensil according to claim 5, wherein the pen tip is provided at each end of the barrel.

**8.** The writing utensil according to claim 5, wherein the pen tip comprises: the writing portion having a capillary force; and a ballpoint pen tip.

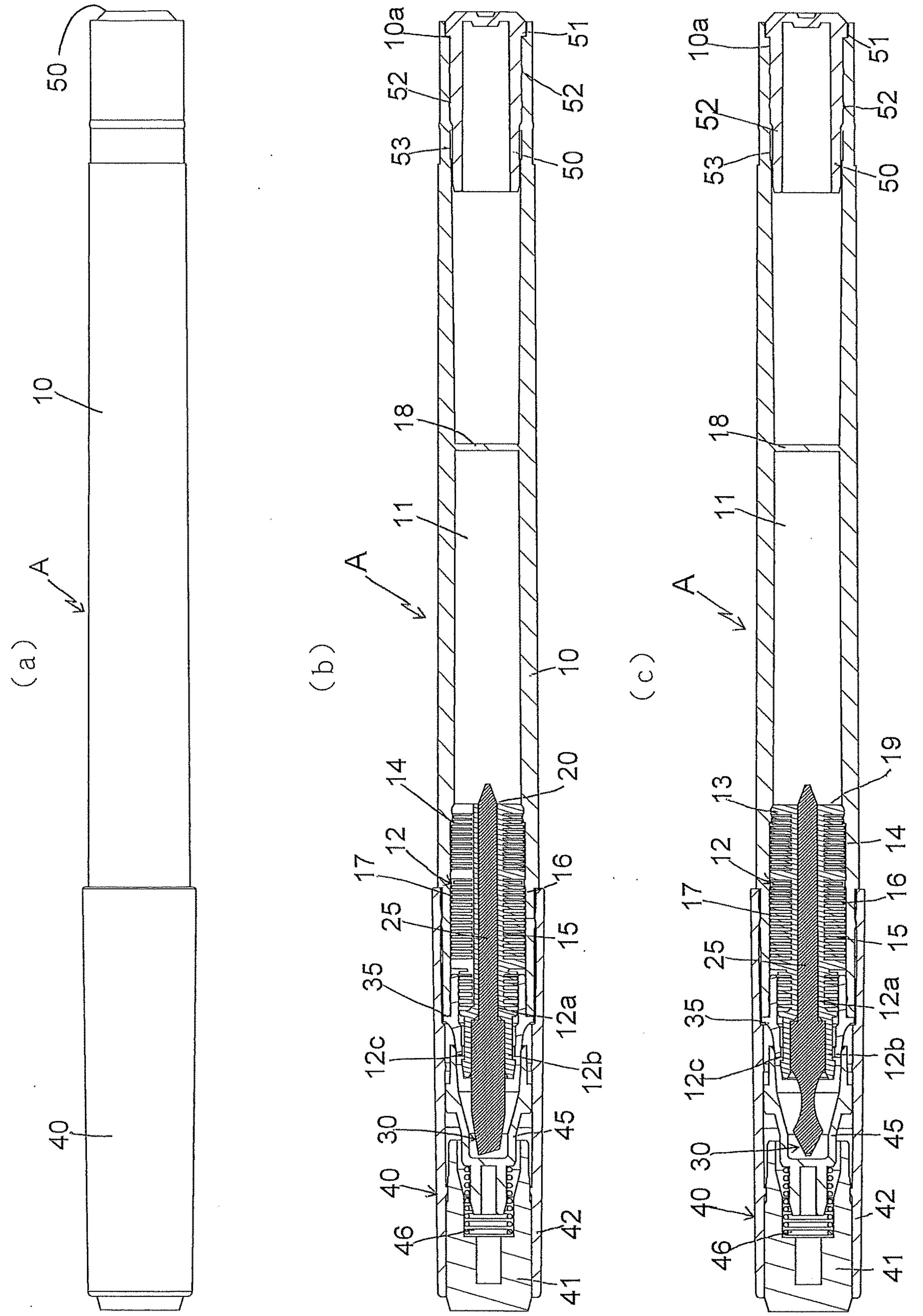
(a)
A
50
10
40
(b)
A
10a
51
52
52
53
50
18
11
10
14
20
12
17
16
25
15
35
12a
12c
12b
30
45
40
46
42
41
(c)
A
10a
51
52
52
53
50
18
11
19
13
14
12
17
16
25
15
35
12a
12c
12b
30
45
40
42
46
41

FIG.1

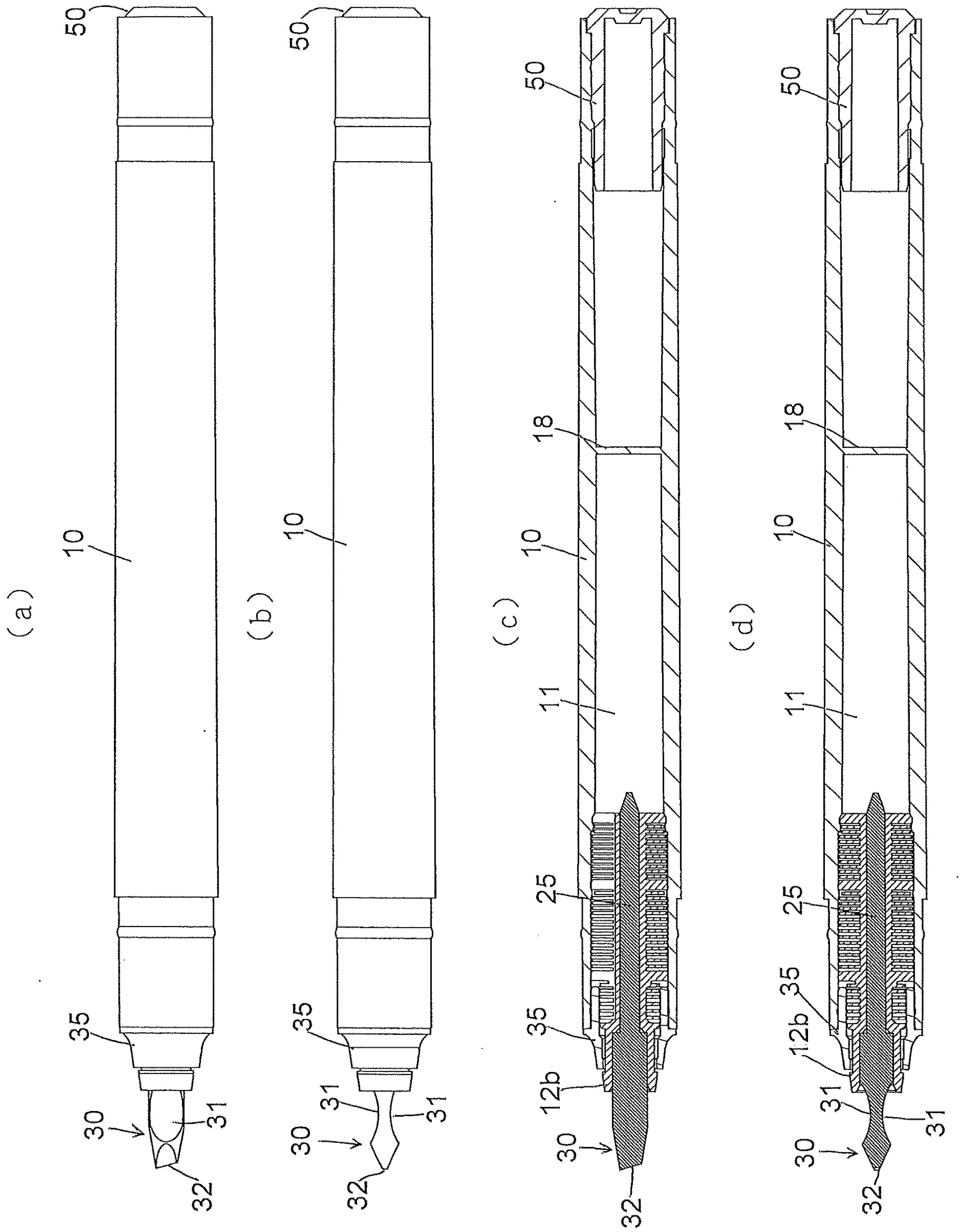


FIG.2

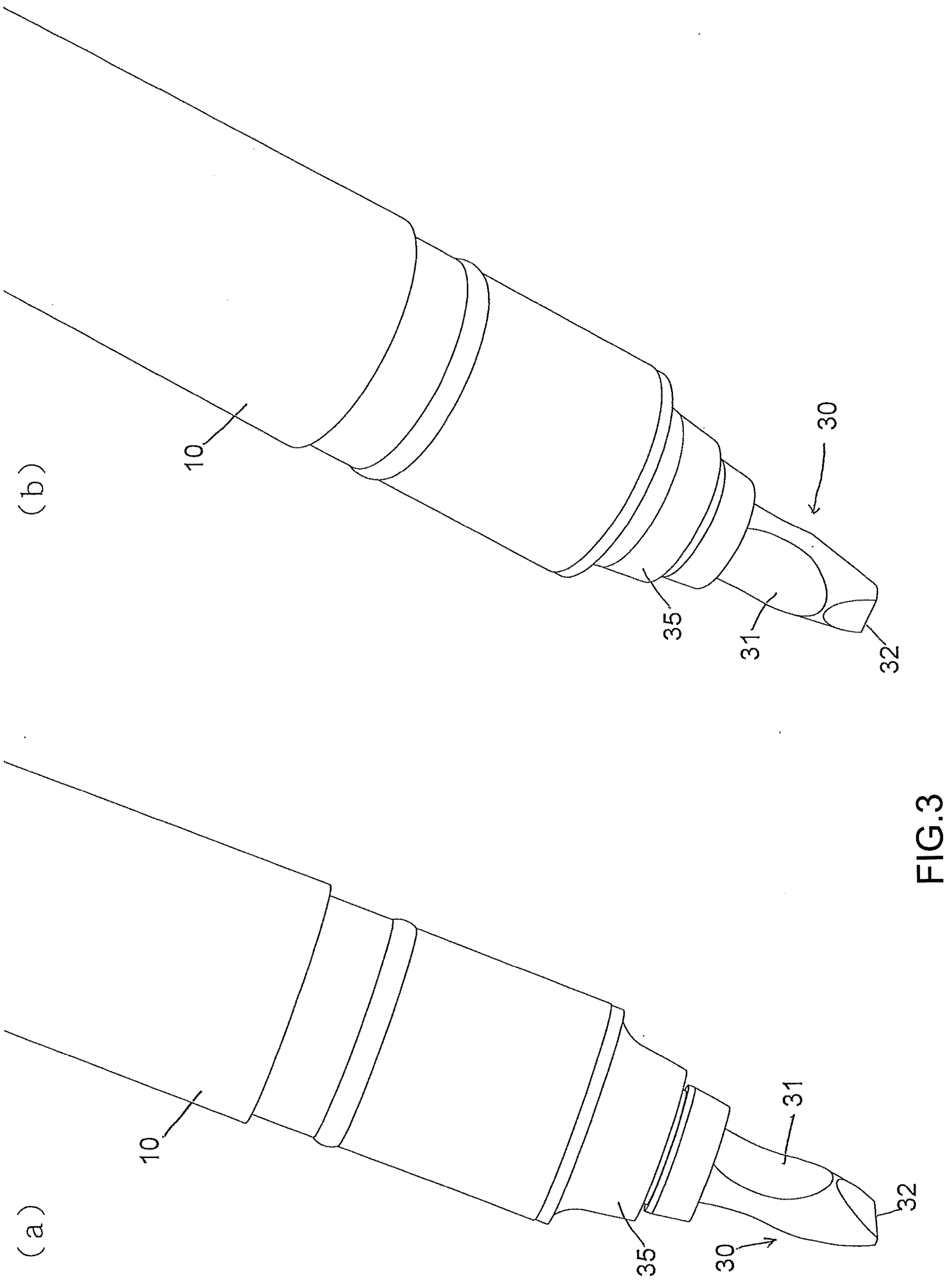


FIG.3

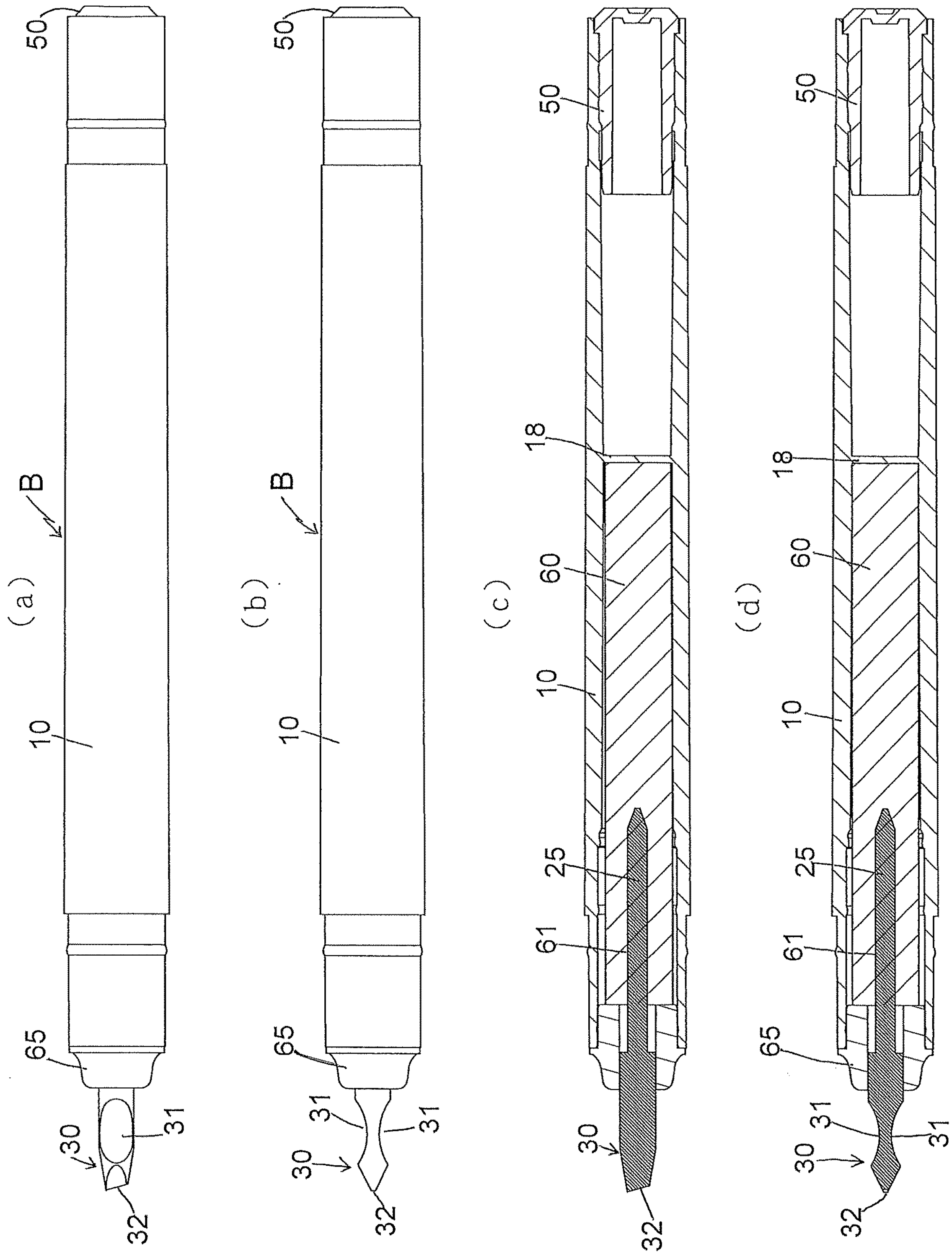


FIG.4

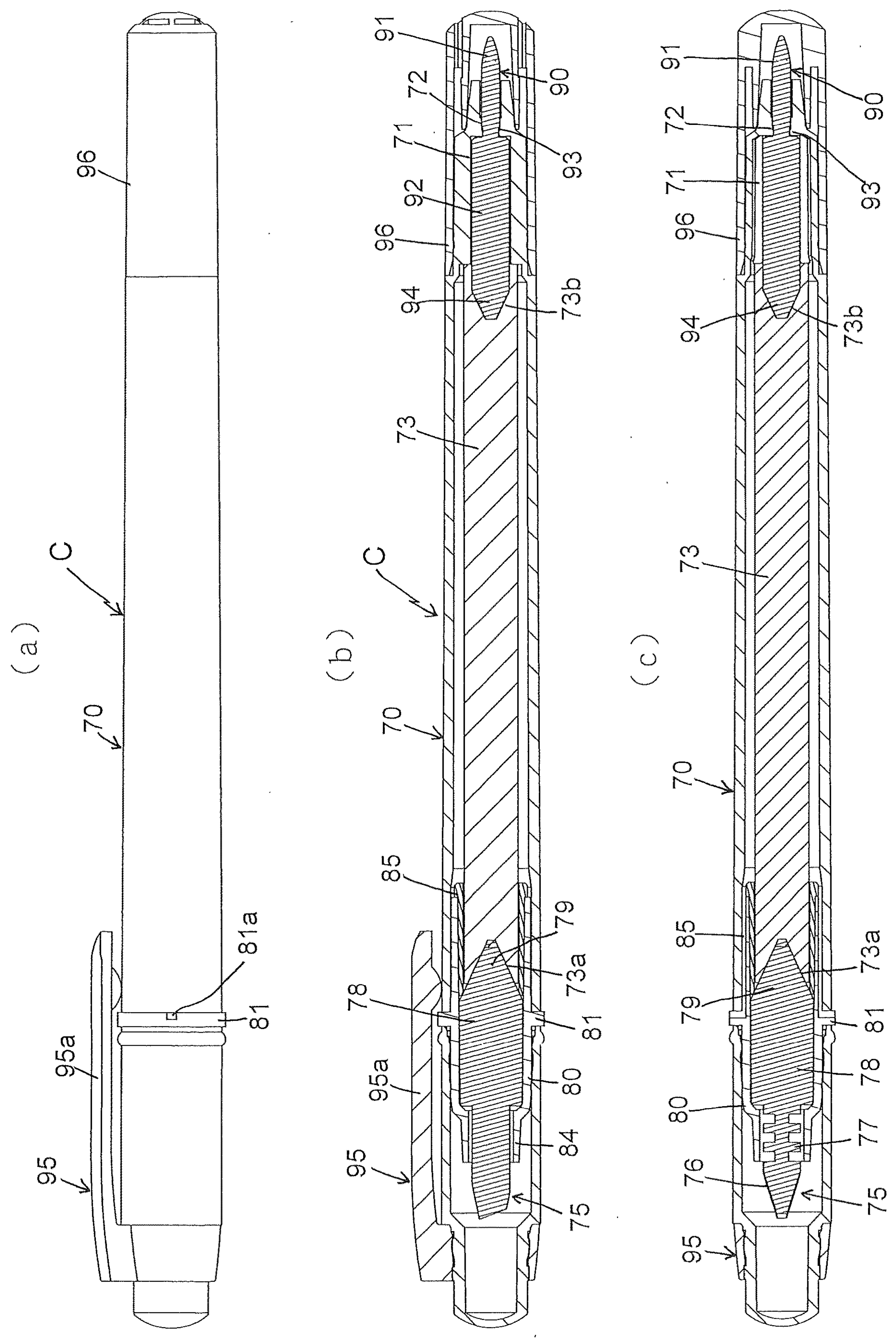
(a)
96
C
70
81a
81
95a
95
(b)
91
90
72
71
93
92
96
94
73b
73
C
70
85
79
73a
78
81
95a
80
84
95
75
(c)
91
90
72
93
71
96
94
73b
73
70
85
73a
79
81
78
80
77
76
75
95

FIG.5

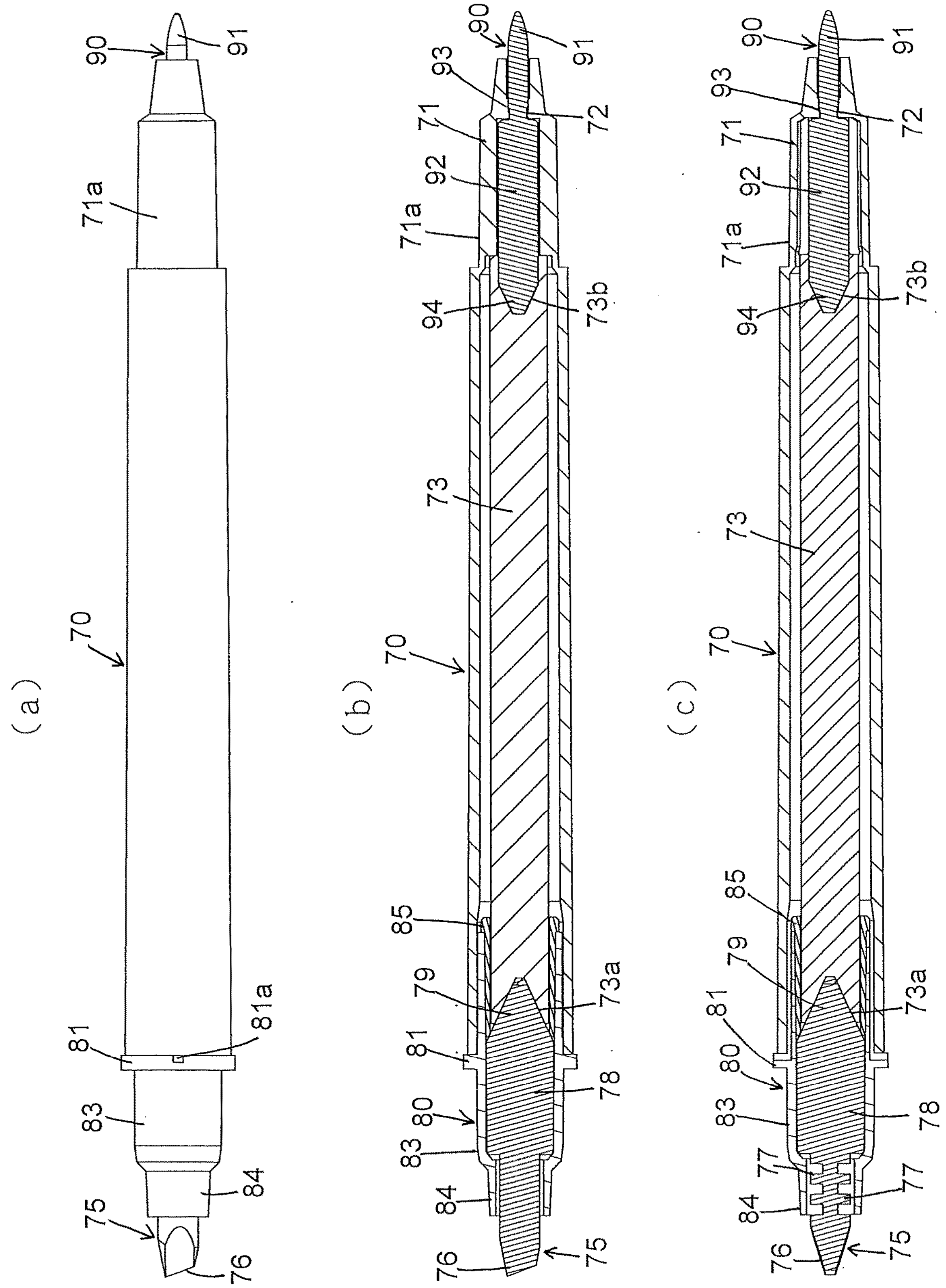
(a)
(b)
(c)
90
91
93
71
72
71a
92
94
73b
73
70
85
79
73a
81
81a
80
83
78
77
84
75
76

FIG.6

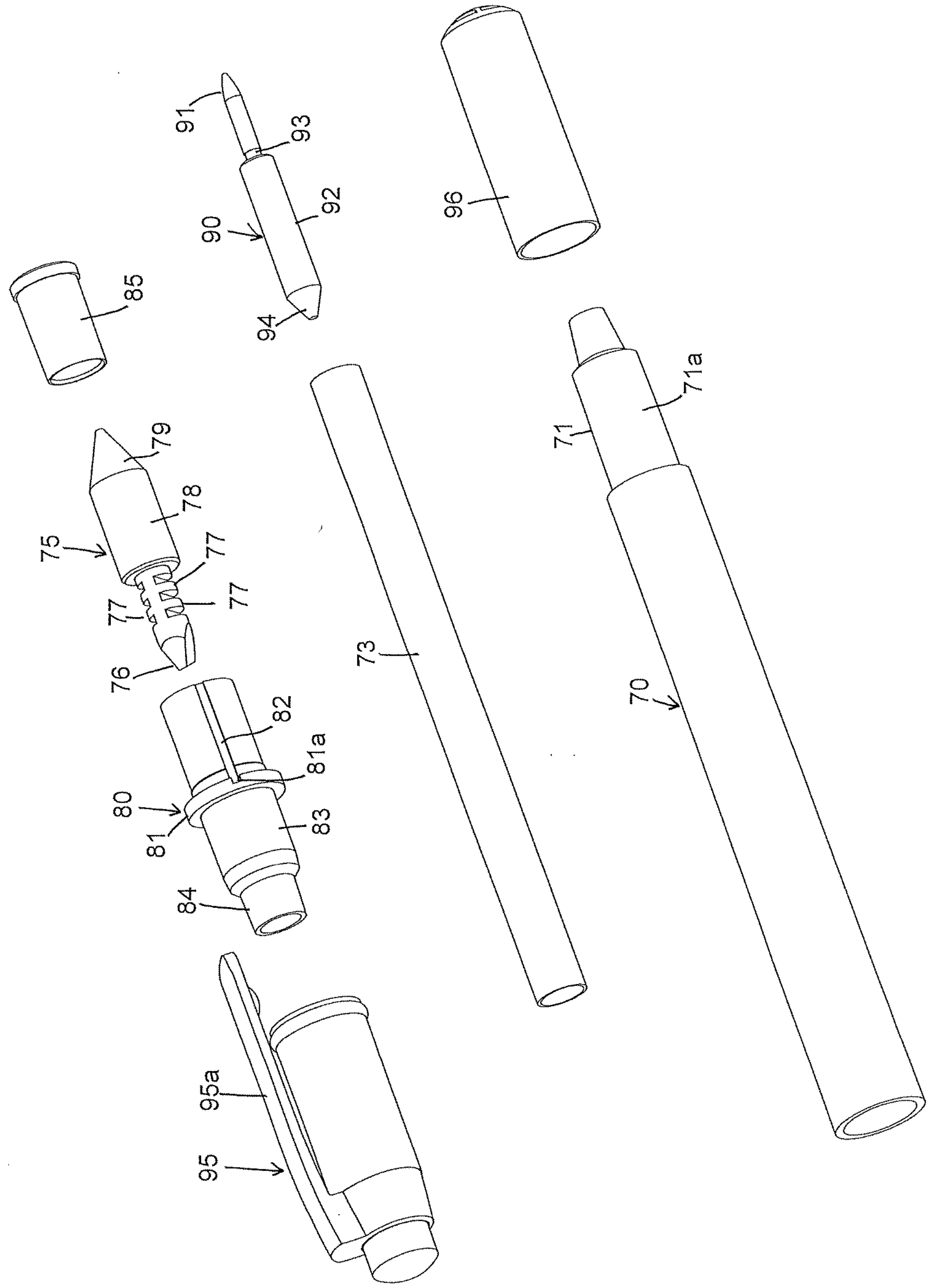

91
93
92
90
94
96
85
79
78
75
77
77
77
76
73
71a
71
70
82
81a
80
81
83
84
95a
95


FIG.7

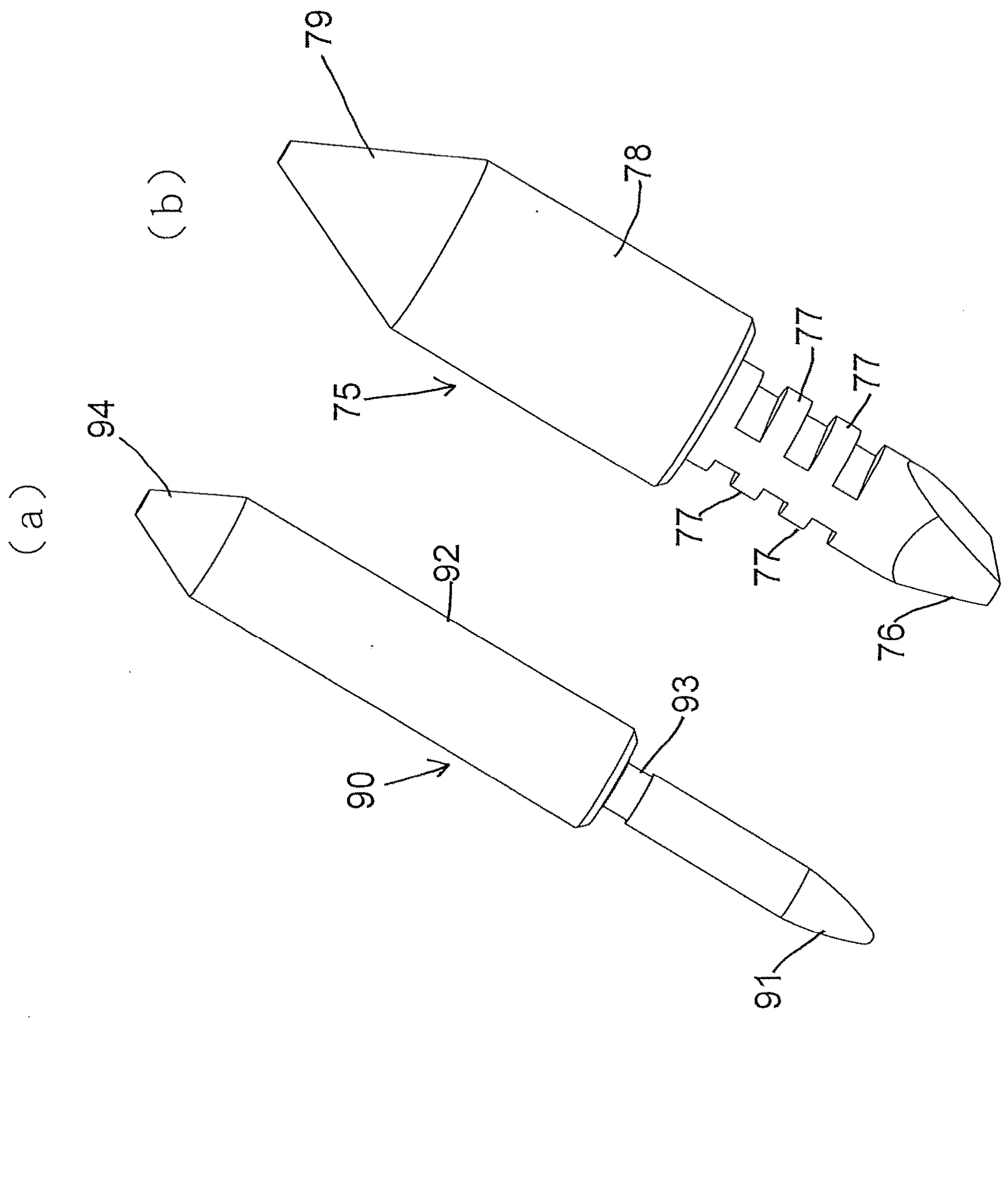


FIG.8

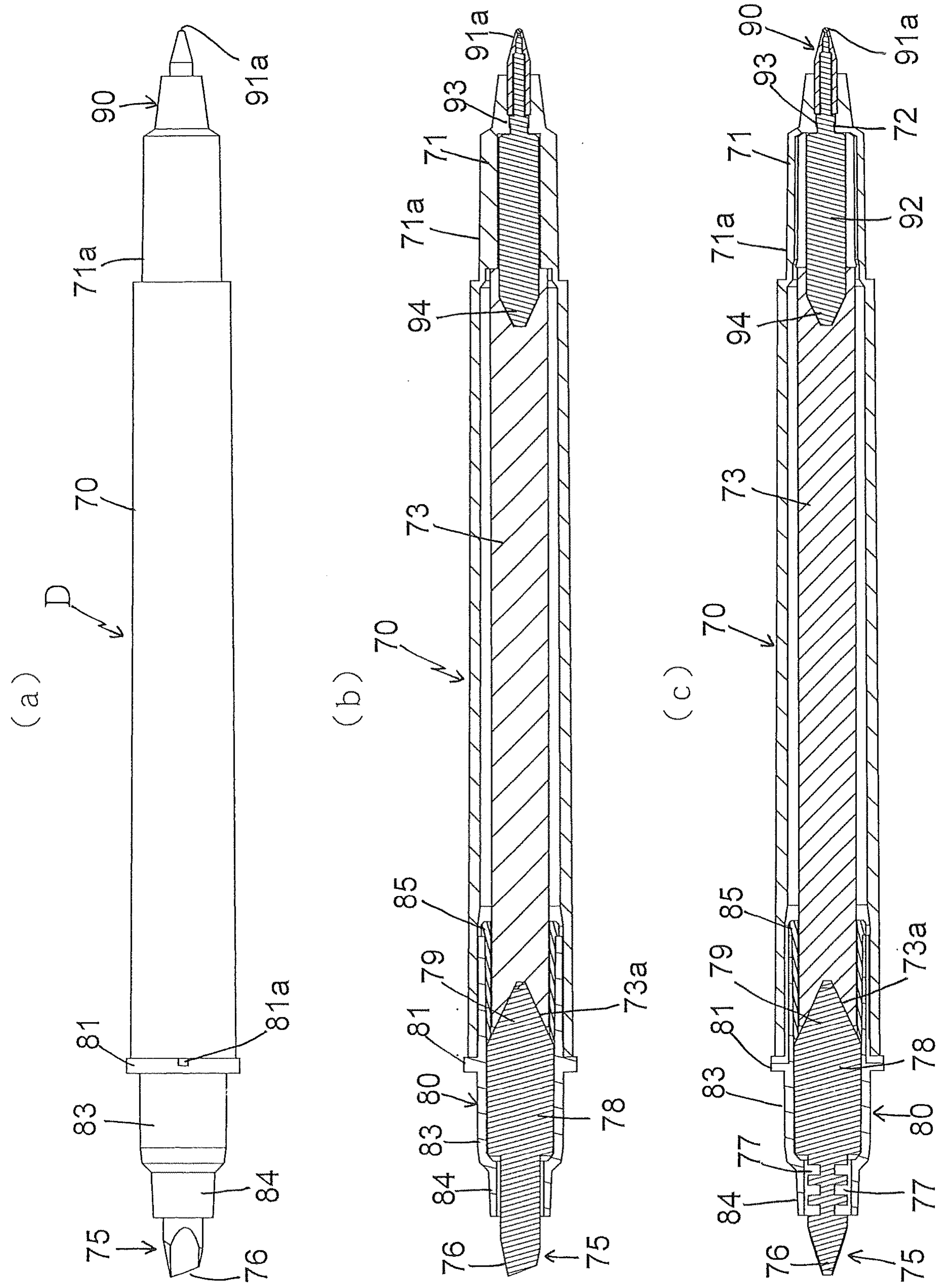
(a)
(b)
(c)
D
70
71
71a
72
73
73a
75
76
77
78
79
80
81
81a
83
84
85
90
91a
92
93
94

FIG.9

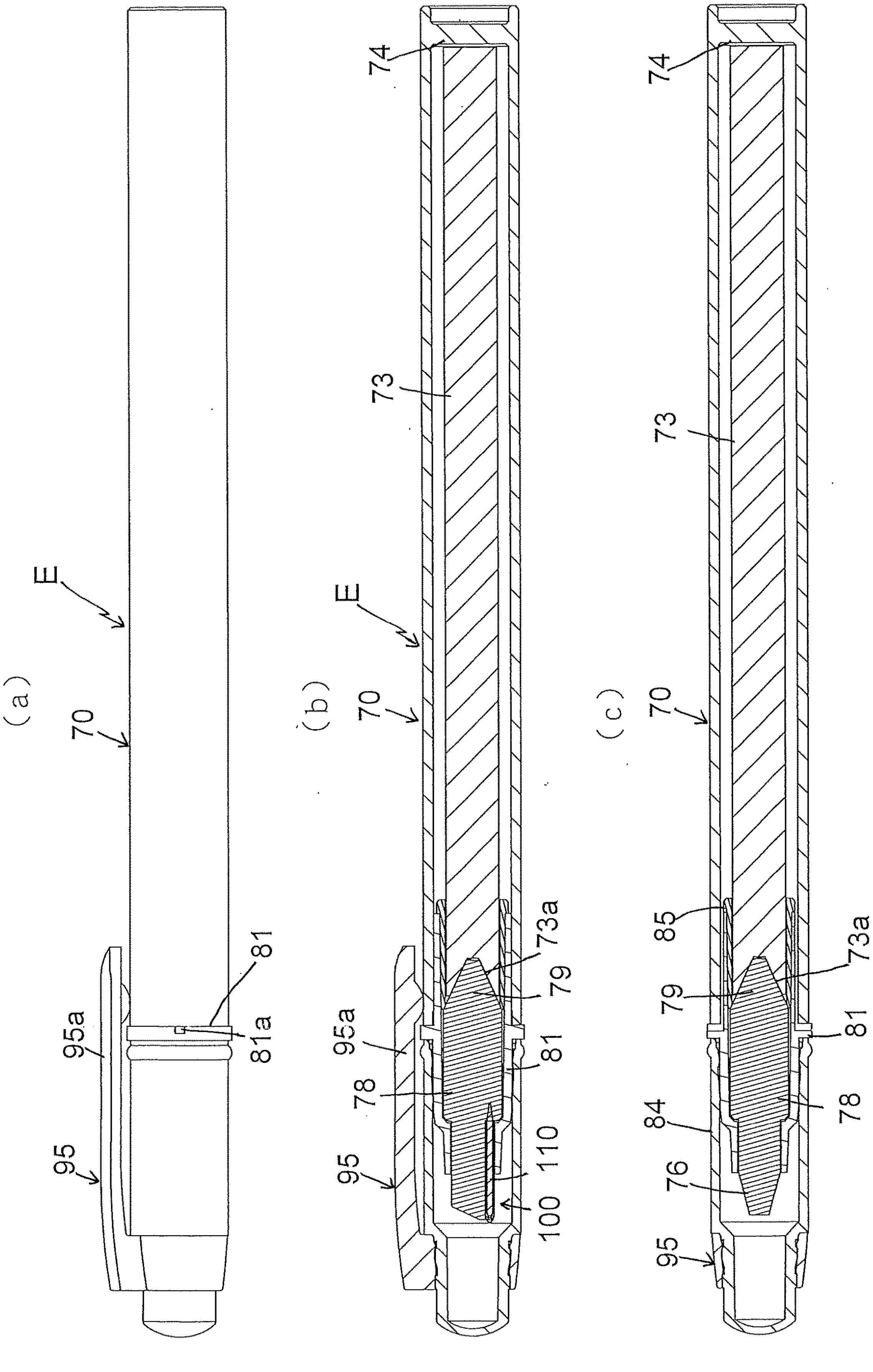
(a)
E
70
95a
95
81
81a
(b)
74
73
E
70
73a
79
95a
81
78
95
110
100
(c)
74
73
70
85
73a
79
81
84
78
76
95

FIG.10

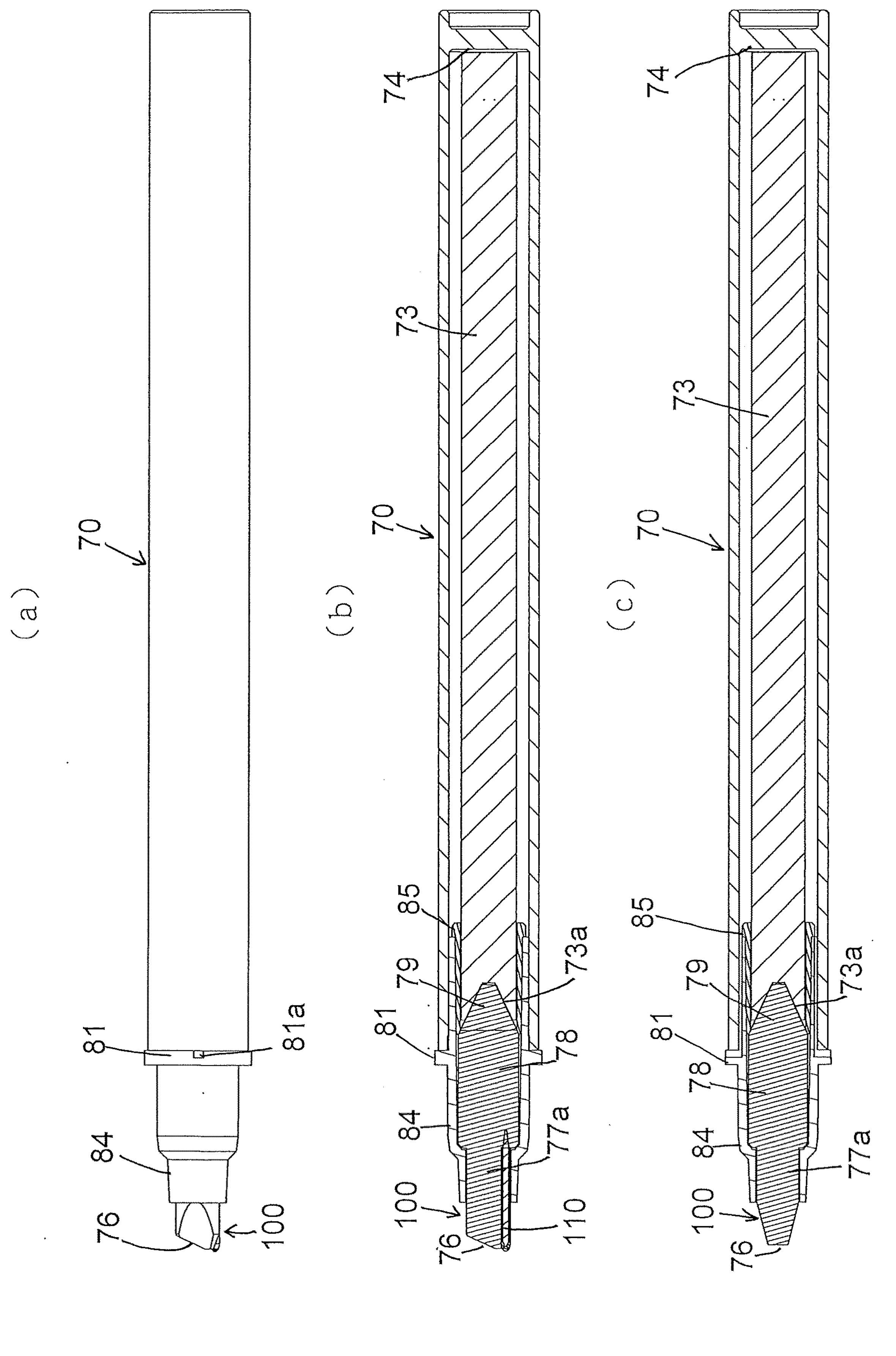
(a)
70
81
81a
84
76
100
(b)
74
73
70
85
79
73a
81
78
84
77a
100
110
76
(c)
74
73
70
85
79
73a
81
78
84
77a
100
76

FIG.11

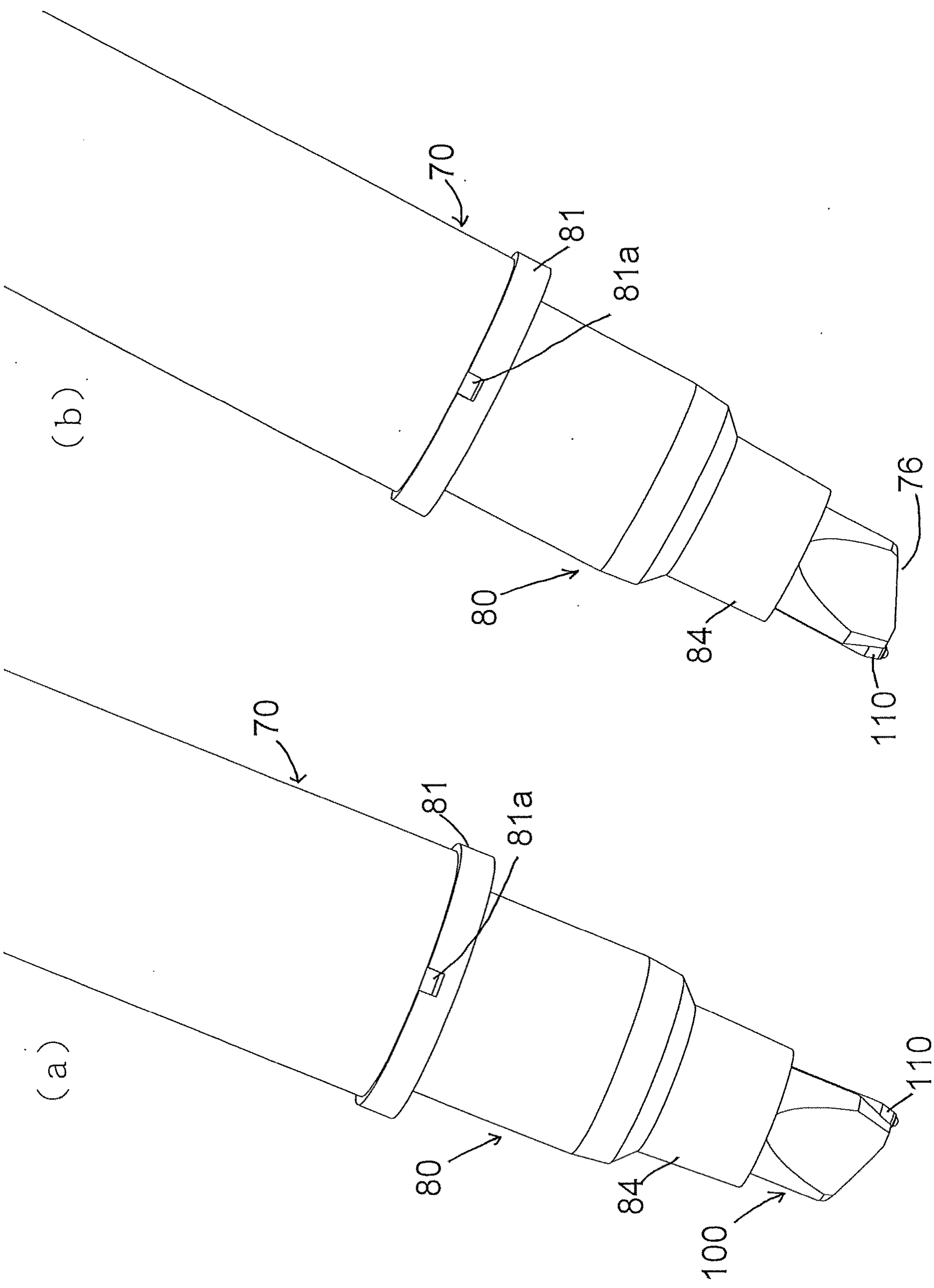


FIG.12

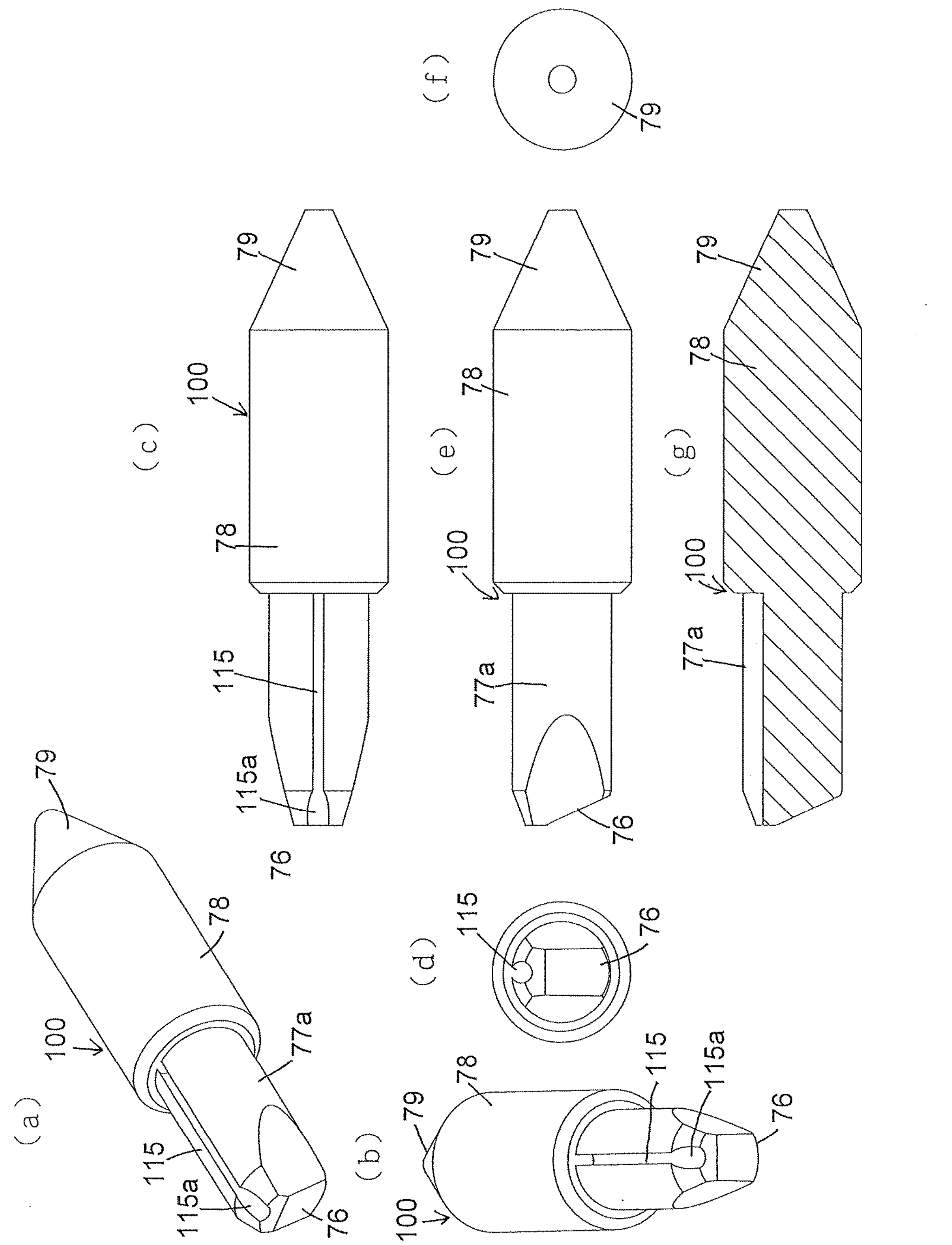


FIG.13

## INTERNATIONAL SEARCH REPORT

International application No.
**PCT/JP2024/017229**

**A. CLASSIFICATION OF SUBJECT MATTER**

***C09D 11/16***(2014.01)i; ***B43K 8/02***(2006.01)i
FI: C09D11/16; B43K8/02

According to International Patent Classification (IPC) or to both national classification and IPC

**B. FIELDS SEARCHED**

Minimum documentation searched (classification system followed by classification symbols)

C09D11/16; B43K8/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2018-104617 A (PILOT CORP.) 05 July 2018 (2018-07-05)<br>claims 1, 4-9, paragraphs [0010]-[0023], [0073]-[0080], [0085]-[0091], examples 1-10 | 1-4<br>2-8 |
| X | JP 2014-214212 A (PILOT CORPORATION) 17 November 2014 (2014-11-17)<br>claim 1, paragraphs [0009]-[0027], [0038], [0039], examples 1-7 | 1, 3-4 |
| Y | JP 2011-144357 A (MITSUBISHI PENCIL CO., LTD.) 28 July 2011 (2011-07-28)<br>claim 3, paragraphs [0032], [0033], examples 7, 8 | 2-8 |
| Y | JP 10-157372 A (ZEBRA PEN CORP.) 16 June 1998 (1998-06-16)<br>claims 1, 2, paragraphs [0003]-[0017], fig. 1-4 | 5-8 |
| Y | JP 2018-103429 A (PILOT CORPORATION) 05 July 2018 (2018-07-05)<br>claims 1, 5, paragraphs [0019]-[0043], fig. 2-4, 6-10, 12-14, 16-18, 20, 21 | 6-8 |
| Y | JP 2022-12550 A (KOKUYO CO., LTD.) 17 January 2022 (2022-01-17)<br>claims 1-10, paragraphs [0011]-[0111], fig. 1 | 7-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**
**Information on patent family members**

International application No.
**PCT/JP2024/017229**

| Patent document cited in search report | Publication date (day/month/year) | Patent family member(s) | Publication date (day/month/year) |
|---|---|---|---|
| JP 2018-104617 A | 05 July 2018 | (Family: none) | |
| JP 2014-214212 A | 17 November 2014 | (Family: none) | |
| JP 2011-144357 A | 28 July 2011 | US 2012/0316276 A1<br>claim 3, paragraph [0074], examples 7, 8<br>WO 2011/074634 A1<br>EP 2514792 A1<br>CN 102762675 A<br>KR 10-2013-0004472 A | |
| JP 10-157372 A | 16 June 1998 | (Family: none) | |
| JP 2018-103429 A | 05 July 2018 | JP 2021-151793 A | |
| JP 2022-12550 A | 17 January 2022 | CN 113879028 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016065173 A
- JP 2019210472 A
- JP 2018053182 A